# EUROPEAN PATENT APPLICATION

(11) **EP 4 772 551 A1**
(43) Date of publication of application: **08.07.2026**
(21) Application number: 24890360.1
(22) Date of filing: 29.09.2024
(51) Int. Cl.: C08F 220/58, C09K 8/68

(54) **COPOLYMER, PREPARATION METHOD THEREFOR, AND USE THEREOF**

(30) Priority: 17.11.2023 CN 202311541152
(71) Applicant: China Petroleum & Chemical Corporation, Beijing 100728 (CN); Sinopec (Beijing) Research Institute of Chemical Industry Co., Ltd., Beijing 100013 (CN)
(72) Inventor: YI, Zhuo, Beijing 100013 (CN); HU, Xiaona, Beijing 100013 (CN); LIU, Xi, Beijing 100013 (CN); LI, Yajing, Beijing 100013 (CN); ZHANG, Ruiqi, Beijing 100013 (CN); YANG, Jinbiao, Beijing 100013 (CN); FAN, Rong, Beijing 100013 (CN); SHANG, Dansen, Beijing 100013 (CN); ZHAO, Ruotong, Beijing 100013 (CN)
(74) Representative: Hoffmann Eitle
(86) International application number: PCT/CN2024/122297
(87) International publication number: WO 2025/103002

(57) **Abstract**

A copolymer, a preparation method therefor, and a use thereof. The copolymer contains an olefin backbone, and a sulfonic acid group, an acylamino group, an aminoacyl group, and a tertiary carbonate group, which are bonded to the olefin backbone. By means of a synergistic effect of these functional groups, the hydrolysis rates of the acylamino group and the aminoacyl group can be controlled, and precipitation is inhibited, thereby finally achieving a high hydrolysis rate. The copolymer can be used for profile control and flooding of a high-temperature high-salinity oil reservoir, especially a carbonate rock oil reservoir. The copolymer can be slowly hydrolyzed to release cross-linking sites in the oil reservoir environment, and the cross-linking sites released by hydrolysis can bind with a cross-linking agent to form a profile control and flooding system. After injection into the oil reservoir, initial low viscosity is achieved, and during migration, cross-linking groups are continuously released by means of slow hydrolysis, thereby achieving stepwise tackifying; in addition, the profile control and flooding system maintains certain viscosity and strength, so that deep profile control and flooding, flow channel adjustment, and long-lasting plugging are achieved.

## Description

### CROSS-REFERENCE TO RELATED APPLICATIONS

The application claims the benefit of the China patent application No. "202311541152.8", filed on November 17, 2023, the content of which is specifically and entirely incorporated herein by reference.

### TECHNICAL FIELD

The present invention relates to the technical field of oil extraction, in particular to a copolymer, a preparation method therefor and a use thereof.

### BACKGROUND ART

The carbonate rock oil reservoirs are predominantly composed of the fractured-vuggy reservoir, due to their extremely strong heterogeneity, water injection development of the reservoirs is prone to water channeling and low recovery rate. The carbonate rock oil reservoirs are confronted with challenges such as complex flow state of fluid, the existence of both seepage and pipe flow, water channeling and water flooding through the dominant channels, the oil field production has been plagued by the challenges for a long time. Currently, the widely used profile control and flooding techniques include flow control and plugging control, wherein the flow control involves with injecting a flow control agents into a water well, the injected fluid shall have a low viscosity at the injection stage and a high viscosity after reaching the deep layer. The plugging control involves with injecting a high strength plugging agent into an oil well, it requires that the injected fluids can maintain a high strength for a long time after reaching the deep layer.

The commonly used flow control agents and plugging control agents at present are mostly polymer gels. However, the carbonate rock oil reservoirs typically have a harsh environment. The carbonate rock oil reservoirs in China generally have a temperature within the range of 110-160°C, a mineralization degree larger than or equal to 20×10⁴mg/L, and the content of calcium and magnesium ions larger than or equal to 1×10⁴mg/L. The carbonate rock oil reservoirs in Abu Dhabi in the Middle East typically have a temperature within the range of 115-139°C, and a mineralization degree within the range of 15×10⁴ - 20×10⁴mg/L. The polymers for gels in the prior art are usually composed of acrylamide monomer. The rapid hydrolysis of a large amount of acylamino groups in polymers under the oil reservoir environment leads to the formation of precipitation upon contacting with a high concentration of calcium and magnesium ions, resulting in a sharp drop in viscosity, the high viscosity in the deep layer can hardly be achieved, or due to the significant reduction in acylamino groups, it is challenging to form the high strength gels, leading to rapid gel dehydration and failure, and degraded effects of flow control or plugging control.

The current upper limits of temperature and mineralization degree for the flow control or plugging control gels are far below those in the use environment of the carbonate oil reservoirs, therefore, it is urgently required to develop a novel polymer and gel profile control and flooding system with resistance to high temperature, salinity, and high concentration of calcium and magnesium ions to meet the flow control and plugging requirements of carbonate rock oil reservoirs.

### SUMMARY OF THE INVENTION

The present invention aims to overcome the defects in the prior art concerning the rapid dehydration and failure of the polymer-formed gels in the environment of oil reservoirs, the high viscosity in deep layer can hardly be achieved, poor effect of flow control or plugging control, and provides a copolymer, a preparation method therefor, and a use thereof.

In order to achieve the above object, the first aspect of the present invention provides a copolymer comprising a structural unit A represented by formula I, a structural unit B represented by formula II, a structural unit C represented by formula III, and a structural unit D represented by formula IV; 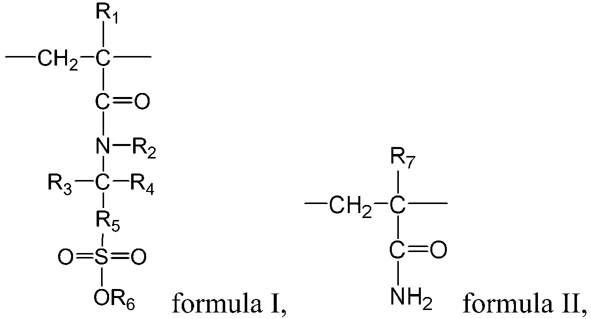 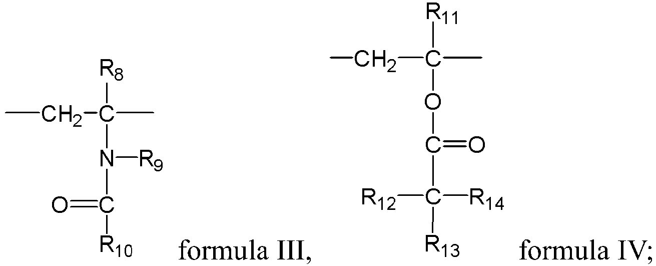
wherein R₁, R₇, R₈ and R₁₁ are each independently H or C1-C6 alkyl;
R₂, R₉ and R₁₀ are each independently H or C1-C6 alkyl;
R₃ and R₄ are each independently C1-C6 alkyl;
R₅ is C1-C6 alkylene; R₆ is H or an alkali metal element;
R₁₂, R₁₃ and R₁₄ are each independently C1-C6 alkyl, and at least one of R₁₂, R₁₃ and R₁₄ is methyl.

The second aspect of the present invention provides a copolymer comprising an olefin backbone, and functional groups bonded to the olefin backbone, the functional groups comprise a sulfonic acid group, a tertiary carbonate group, an acylamino group, and an aminoacyl group; wherein the weight content of said tertiary carbonate group is within the range of 0.06-1.5wt%, and the weight content of said sulfonic acid group is not less than 21wt%, based on the total weight of said copolymer; the copolymer has a viscosity average molecular weight within the range of 5,000,000-18,000,000.

The third aspect of the present invention provides a method for preparing a copolymer, the method comprises: subjecting an alkenyl monomer to a polymerization reaction under a solution polymerization reaction condition in the presence of an initiator; wherein the alkenyl monomer comprises a structural unit A' represented by formula 1, a structural unit B' represented by formula 2, a structural unit C' represented by formula III, and a structural unit D' represented by formula 4; 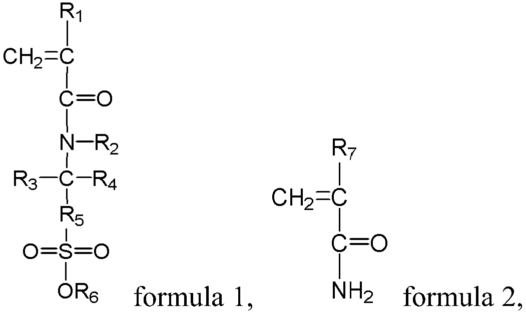 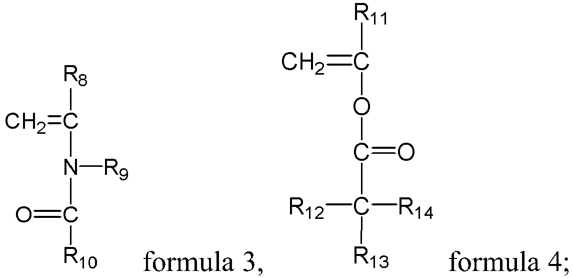
wherein R₁, R₇, R₈ and R₁₁ are each independently H or C1-C6 alkyl;
R₂, R₉ and R₁₀ are each independently H or C1-C6 alkyl;
R₃ and R₄ are each independently C1-C6 alkyl;
R₅ is C1-C6 alkylene; R₆ is H or an alkali metal element;
R₁₂, R₁₃ and R₁₄ are each independently C1-C6 alkyl, and at least one of R₁₂, R₁₃ and R₁₄ is methyl.

The fourth aspect of the present invention provides a copolymer produced with the method according to the aforementioned third aspect.

The fifth aspect of the present invention provides a profile control and flooding system comprising a cross-linking agent, and the aforementioned copolymer

Due to the technical scheme, the present invention produces the favorable technical effects as follows:
(1) The copolymer of the present invention contains an olefin backbone, and a sulfonic acid group, an acylamino group, an aminoacyl group, and a tertiary carbonate group, which are bonded to the olefin backbone. By means of a synergistic effect of these functional groups, the hydrolysis rates of the acylamino group and the aminoacyl group can be controlled, such that the copolymer can be slowly hydrolyzed to release cross-linking sites in the oil reservoir environment to finally achieve a high hydrolysis rate, and the copolymer has a strong resistance to hydrolysis and has a stable skeleton structure.
(2) The cross-linking sites released by hydrolysis of the copolymer in the present invention under the oil reservoir environment can bind with a cross-linking agent to form a profile control and flooding system. After injection into the oil reservoir, initial low viscosity is achieved, and during migration, cross-linking groups are continuously released by means of slow hydrolysis, thereby achieving stepwise tackifying; in addition, the profile control and flooding system maintains certain viscosity and strength such that the deep profile control and flooding, the flow channel adjustment, and the long-lasting plugging are achieved.
   (a) The copolymer of the present invention can cross link with the coordinate bonds formed by the metal cross-linking agent to form a high-viscosity profile control and flooding system, the profile control and flooding system still have a high viscosity after aging at the temperature of 70-130°C for 60 days under the environment with a mineralization degree less than or equal to 300,000 mg/L and a calcium-magnesium ion content less than or equal to 10,000 mg/L, the viscosity increase rate is greater than 200%, the copolymer can be used as a flow control agent of the carbonate rock oil reservoirs to implement the flow channel adjustment.
   (b) The copolymer of the present invention can react with the phenolic cross-linking agent and aldehyde-based cross-linking agents to form a profile control and flooding system with a high strength, the profile control and flooding system can keep stability for at least 90 days at a high temperature of 140-160°C under the environment with a mineralization degree less than or equal to 300,000 mg/L and a calcium-magnesium ion content less than or equal to 10,000 mg/L, maintains desirable viscoelasticity, has a low dehydration rate, and can be used as a carbonate rock oil reservoir plugging agent to achieve long-lasting plugging.

### BRIEF DESCRIPTION OF THE DRAWINGS

FIG. 1 illustrates an infrared spectrogram of the sulfonic acid type copolymer prepared in Example 1;
FIG. 2 illustrates an X-ray photoelectron energy spectrum diagram of the sulfonic acid type copolymer prepared in Example 4;
FIG. 3a and FIG. 3b are a C1s diagram and an O1s diagram for a sulfonic acid copolymer respectively; wherein FIG. 3a-1 and FIG. 3b-1 are a C1s diagram and an O1s diagram for a sulfonic acid copolymer having structural units A and B respectively; FIG. 3a-2 and FIG. 3b-2 are a C1s diagram and an O1s diagram for a sulfonic acid copolymer having structural units A, B and C respectively; FIG. 3a-3 and FIG. 3b-3 are a C1s diagram and an O1s diagram for a sulfonic acid copolymer having structural units A, B, C and D respectively;
In FIG. 4, curve a illustrates an infrared spectrogram of the sulfonic acid type copolymer prepared in Example 4, curve b illustrates an infrared spectrogram of the sulfonic acid type copolymer prepared in Comparative Example D3.

### DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

The first aspect of the present invention provides a copolymer comprising a structural unit A represented by formula I, a structural unit B represented by formula II, a structural unit C represented by formula III, and a structural unit D represented by formula IV;

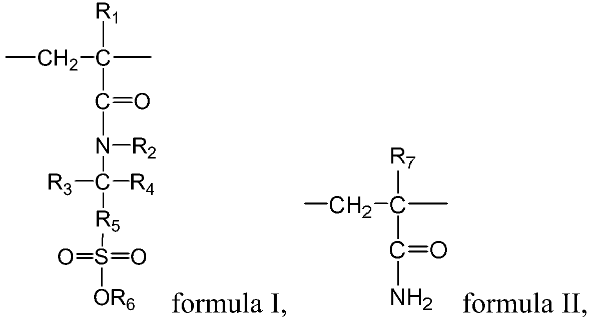

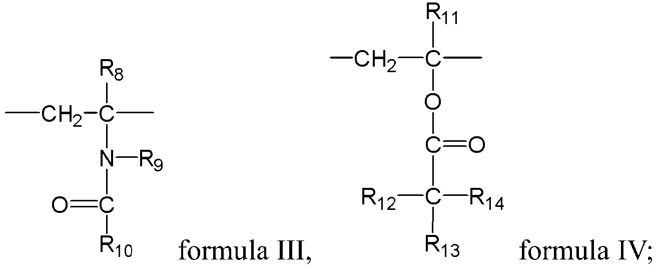

Wherein R₁, R₇, R₈ and R₁₁ are each independently H or C1-C6 alkyl;
R₂, R₉ and R₁₀ are each independently H or C1-C6 alkyl;
R₃ and R₄ are each independently C1-C6 alkyl;
R₅ is C1-C6 alkylene; R₆ is H or an alkali metal element;
R₁₂, R₁₃ and R₁₄ are each independently C1-C6 alkyl, and at least one of R₁₂, R₁₃ and R₁₄ is methyl.

According to the present invention, the copolymer comprises structural units A, B, C and D, by means of a synergistic effect of these structural units, the hydrolysis rates of the copolymer can be controlled, such that the copolymer can be slowly hydrolyzed to release cross-linking sites in the oil reservoir environment, and finally reach a high hydrolysis rate. Among them, the structural units A and D allow the synergistic control of the hydrolysis rates of structural units B and C, and improve stability of the copolymer at a high temperature. In addition, the structural unit A allows the copolymer to exhibit a desirable solubility without precipitation under the environment of a high mineralization degree, and a high concentration of calcium and magnesium ions.

According to the present invention, C1-C6 alkyl includes, but is not limited to, methyl, ethyl, propyl, butyl, pentyl, and hexyl.

According to a preferred embodiment of the invention, R₁, R₇, R₈ and R₁₁ are each independently H or methyl.

According to a preferred embodiment of the invention, R₂ is H.

According to a preferred embodiment of the invention, R₃ and R₄ are each independently methyl.

According to preferred embodiments of the present invention, R₅ is methylene; R₆ is H or Na.

According to a preferred embodiment of the invention, R₉ is H.

According to a preferred embodiment of the invention, R₁₀ is H or methyl.

According to some preferred embodiments of the invention, each of R₁₂, R₁₃ and R₁₄ is independently methyl.

According to other preferred embodiments of the invention, one substituent of R₁₂, R₁₃ and R₁₄ is methyl, the total carbon atom number of the remaining two substituents is from 6 to 8; preferably, R₁₂ is methyl, R₁₃ is n-pentyl, and R₁₄ is methyl; or R₁₂ is methyl, R₁₃ is n-hexyl, and R₁₄ is methyl.

According to a particularly preferred embodiment of the invention, R₁, R₇, R₈ and R₁₁ are each independently H; R₂ is H; R₃ and R₄ are each independently methyl; R₅ is methylene; R₆ is H or Na; R₉ is H; R₁₀ is H or methyl; R₁₂, R₁₃ and R₁₄ are each independently methyl.

According to a preferred embodiment of the invention, based on the total weight of the copolymer, the structural unit D is contained in an amount of 0.1-2wt%, such as 0.1wt%, 0.2wt%, 0.3wt%, 0.5wt%, 0.8wt%, 1wt%, 1.2wt%, 1.5wt%, 1.8wt%, 2wt%, and a random value within the range consisting of any two numerical values mentioned above.

According to a preferred embodiment of the invention, based on the total weight of the copolymer, the structural unit A is contained in an amount of not less than 60wt%, such as 60wt%, 65wt%, 70wt%, 75wt%, 80wt%, 84wt%, 85wt%, 88wt%, 90wt%, and a random value within the range consisting of any two numerical values mentioned above.

According to a preferred embodiment of the invention, the structural unit A is contained in an amount of 65-90wt%, the structural unit B is contained in an amount of 5-30wt%, the structural unit C is contained in an amount of 1-8wt%, the structural unit D is contained in an amount of is 0.1-2wt%, based on the total weight of the copolymer.

According to the invention, based on the total weight of the copolymer, the structural unit A is contained in an amount of 65-90wt%, such as 65wt%, 70wt%, 75wt%, 80wt%, 84wt%, 85wt%, 88wt%, 90wt%, and a random value within the range consisting of any two numerical values mentioned above, preferably 70-84wt%; the structural unit B is contained in an amount of 5-30wt%, e.g., 5wt%, 10wt%, 15wt%, 20wt%, 25wt%, 30wt%, and a random value within the range consisting of any two numerical values mentioned above, preferably 12-25wt%; the structural unit C is contained in an amount of 1-8wt%, such as 1wt%, 2wt%, 3wt%, 4wt%, 5wt%, 6wt%, 7wt%, 8wt%, and a random value within the range consisting of any two numerical values mentioned above, preferably 3-6wt%; the structural unit D is contained in an amount of 0.1-2wt%, e.g., 0.1wt%, 0.2wt%, 0.3wt%, 0.5wt%, 0.8wt%, 1wt%, 1.2wt%, 1.5wt%, 1.8wt%, 2wt%, and a random value within the range consisting of any two numerical values mentioned above, preferably 0.2-1wt%.

According to the present invention, the detection method of the structural units contained in the polymer is as follows:
(1) Preparation of an extraction solution A: 900g of deionized water is added into 2,000mL of a volumetric flask, a pipette is used for transferring 20mL of ethanol, which is kept a constant volume to the scale line with isopropanol.
(2) Preparation of an extraction solution B: 500g of deionized water is added into 2,000mL of a volumetric flask, a pipette is used for transferring 20mL of ethanol, which is kept a constant volume to the scale line with isopropanol.
(3) 2g of polymer powder sample is precisely weighed in a vial, 10mL of solution A is added, and placed in a magnetic stirrer and subjected to stirring for 40min; 10mL of solution B is further added again, and subjected to a continuous stirring for 40min; a supernatant is extracted, a reduced pressure distillation is performed to remove isopropanol, ethanol and water, a test sample is obtained.
(4) Qualitative detection of monomers: the obtained test sample is initially subjected to a liquid phase mass spectrometry to determine the amount and structure of monomers; and the test sample is separated by column chromatography, and the structure of each monomer is determined by assistance of nuclear magnetism.
(5) Quantitative detection: the polymer powder is subjected to scanning analysis using X-ray photoelectron spectroscopy (XPS), the surface element composition C, O, N, S and the like is determined, and a further narrow spectrum scan is then performed for a specific element, the existing form of said specific element is analyzed, and the quantitative analysis is performed. The feeding amount of each monomer is calculated based on the element content obtained from the analysis, and the weight percentage content of each structural unit is determined based on the feeding amount of each monomer. For example, the structure of structural unit A is determined by the monomer corresponding to the S element, and the weight percentage content of structural unit A is determined by the percentage content of the S element.

According to the invention, the molar ratio of elements C, O, N and S in the polymer measured by XPS is (8.5-15) : (4-6) : (1-3) :1.

According to the invention, C is present in the forms of C-C, C-N, C-S, C=O and C-O-C=O, and the molar ratio of said carbon bonds is (70-950) : (25-480) : (5-180) : (5-280) :1.

According to the invention, O is present in the forms of N-C=O, SO₂-O and O-C=O, and the molar ratio of said oxygen bonds is (28-390) : (35-750) :1.

According to the present invention, the infrared spectrogram of said polymer illustrates the anti-symmetric contraction vibration peak and symmetric contraction vibration peak of C-O-C.

The second aspect of the present invention provides a copolymer comprising an olefin backbone, and functional groups bonded to the olefin backbone, the functional groups comprise a sulfonic acid group, a tertiary carbonate group, an acylamino group, and an aminoacyl group; wherein the weight content of said tertiary carbonate group is within the range of 0.06-1.5wt%, and the weight content of said sulfonic acid group is not less than 21wt%, based on the total weight of said copolymer; the copolymer has a viscosity average molecular weight within the range of 5,000,000-18,000,000.

According to the present invention, acylamino group refers to a group from an alkenyl amide, e.g., -CONH₂; aminoacyl group refers to a group from an N-alkenyl amide, such as -NHCOR.

According to the invention, after the structure and weight percentage content of each monomer and each structural unit are determined according to the detection method for the structural units contained in the polymer, the weight percentage content of each group is determined through analysis and calculation. For example, the molar content of corresponding structural unit A is calculated based on the molar content of S element and the content of functional groups of the corresponding SO₂-O in diagram O1s, and the weight percentage content of the sulfonic acid group is then calculated; the weight percentage content of the corresponding tertiary carbonate group is calculated according to the content of functional groups of the ester groups in diagrams O1s and C1s.

According to the present invention, based on the total weight of the copolymer, the content by weight of the tertiary carbonate group is within the range of 0.06-1.5wt%, such as 0.06wt%, 0.07wt%, 0.08wt%, 0.09wt%, 0.1wt%, 0.2wt%, 0.3wt%, 0.4wt%, 0.5wt%, 0.6wt%, 0.7wt%, 0.8wt%, 0.9wt%, 1wt%, 1.1wt%, 1.2wt%, 1.3wt%, 1.4wt%, 1.5wt%, and a random value within the range consisting of any two numerical values mentioned above, preferably 0.2-1wt%.

According to the invention, based on the total weight of the copolymer, the content by weight of the sulfonic acid group is not less than 21wt%, e.g., 21wt%, 22wt%, 23wt%, 24wt%, 25wt%, 26wt%, 27wt%, 28wt%, 29wt%, 30wt%, 31wt%, 32wt%, 33wt%, 34wt%, 35wt%, and a random value within the range consisting of any two numerical values mentioned above, preferably 25-30wt%.

According to the present invention, the copolymer has a viscosity average molecular weight within the range of 5,000,000-18,000,000, such as 5,000,000, 6,000,000, 7,000,000, 8,000,000, 9,000,000, 10,000,000, 11,000,000, 11,600,000, 12,000,000, 13,000,000, 14,000,000, 15,000,000, 16,000,000, 17,000,000, 18,000,000, and a random value within the range consisting of any two numerical values mentioned above.

The copolymer of the present invention includes a hydrolysable structural unit, wherein the hydrolysable structural unit refers to a structural unit that is hydrolyzed to generate crosslinking groups such as carboxyl and amine groups, under the synergistic effects of the structural unit comprising sulfonic acid groups and the structural unit comprising tertiary carbonate groups, the hydrolysis rate of the hydrolysable structural unit in the copolymer can be controlled, the stability of said copolymer at a high temperature is enhanced, such that the copolymer can slowly release crosslinking groups after aging at a high temperature, after injection of the copolymer together with a cross-linking agent into the oil reservoir, initial low viscosity is achieved, and during migration, cross-linking groups are continuously released by means of slow hydrolysis, thereby achieving stepwise tackifying; in addition, the profile control and flooding system maintains certain viscosity and strength, so that deep profile control and flooding is achieved.

According to the present invention, the crosslinking groups generated after the hydrolysis at a high temperature refer to the carboxyl and amine groups generated after the hydrolysis of said copolymer.

According to the invention, the total hydrolysis rate of an aqueous solution having a copolymer concentration of 5,000 mg/L after aging at 130°C for 15 days is not larger than 20%, the total hydrolysis growth rate of the aqueous solution from aging 15 days to aging 60 days is not less than 90%, wherein the total hydrolysis rate refers to the percentage of the total mass of the structural units hydrolyzed to produce carboxyl and amine groups to the initial mass of said copolymer.

According to the invention, the acylamino group hydrolysis rate of an aqueous solution having a copolymer concentration of 5,000 mg/L after aging at 130°C for 15 days is not larger than 15%, the hydrolysis growth rate of the acylamino group in said aqueous solution from aging 15 days to aging 60 days is not less than 90%, wherein the hydrolysis rate of the acylamino group refers to the percentage of the total mass of the structural units hydrolyzed to produce carboxyl and amine groups to the initial mass of said copolymer.

The changes of the hydrolysis rate demonstrate that the copolymer may slowly release the crosslinking groups after aging at a high temperature, i.e., the crosslinking groups produced by structural units B and C in the copolymer after high temperature aging have a slow release function. The copolymer achieves an initial low viscosity during the initial injection into the reservoir, and achieves stepwise tackifying during the transfer process by continuously releasing the crosslinking groups through hydrolysis to cross-link with a cross-linking agent, and allows the gel system to maintain a certain viscosity and strength, after aging at a high temperature of 130°C for 60 days, the copolymer still have a desirable viscosity and strength, maintain a long term stability, and achieve the deep profile control and flooding, thus it can be used as a carbonate reservoir flow control agent and a plugging control agent for the flow channel adjustment and plugging.

According to a preferred embodiment of the invention, the viscosity increase rate of the copolymer gel solution formed by mixing the copolymer with a metal cross-linking agent after aging at 130°C for 60 days is greater than 200%, wherein the viscosity increase rate = (viscosity after aging for 60 days - initial viscosity)/initial viscosity ×100%.

Formulation of the copolymer gel solution, the copolymer sample is placed in 900g of simulated brine, subjected to stirring at 600 rpm till complete dissolution of said copolymer sample, 0.5g of chromium citrate and 0.8g of chromium lactate are further added and stirred to completely dissolve the compounds, 0.8g of sodium thiosulfate is added, the simulated brine is replenished to a total weight of 1kg, then stirred uniformly to obtain a copolymer gel solution, wherein the simulated brine has a mineralization degree of 300,000 mg/L, and a content of calcium and magnesium ions being 10,000 mg/L.

Detection method: the initial viscosity and the viscosity after aging for 60 days are measured respectively by using a Brookfield R/S Rheometer with a shear rate of 7.34s⁻¹ at a temperature of 30°C, the viscosity increase rate is calculated according to the above formula.

The third aspect of the invention provides a method for preparing a copolymer, the method comprises: subjecting an alkenyl monomer to a polymerization reaction under a solution polymerization reaction condition in the presence of an initiator; wherein the alkenyl monomer comprises a structural unit A' represented by formula 1, a structural unit B' represented by formula 2, a structural unit C' represented by formula III, and a structural unit D' represented by formula 4; 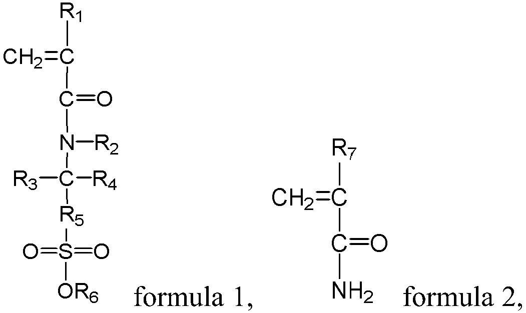 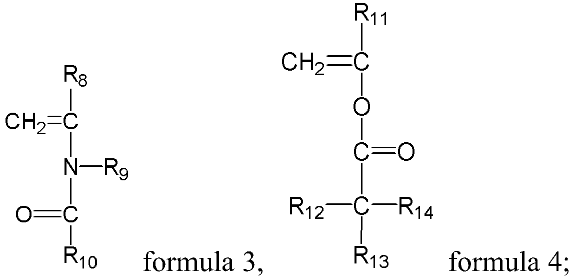
wherein R₁, R₇, R₈ and R₁₁ are each independently H or C1-C6 alkyl;
R₂, R₉ and R₁₀ are each independently H or C1-C6 alkyl;
R₃ and R₄ are each independently C1-C6 alkyl;
R₅ is C1-C6 alkylene; R₆ is H or an alkali metal element;
R₁₂, R₁₃ and R₁₄ are each independently C1-C6 alkyl, and at least one of R₁₂, R₁₃ and R₁₄ is methyl.

According to the invention, the C1-C6 alkyl includes, but is not limited to, methyl, ethyl, propyl, butyl, pentyl, hexyl, and the like.

According to a preferred embodiment of the invention, R₁, R₇, R₈ and R₁₁ are each independently H or methyl.

According to a preferred embodiment of the invention, R₂ is H.

According to a preferred embodiment of the invention, R₃ and R₄ are each independently methyl.

According to preferred embodiments of the present invention, R₅ is methylene; R₆ is H or Na.

According to a preferred embodiment of the invention, R₉ is H.

According to a preferred embodiment of the invention, R₁₀ is H or methyl.

According to some preferred embodiments of the invention, R₁₂, R₁₃ and R₁₄ are each independently methyl.

According to yet other preferred embodiments of the present invention, one substituent of R₁₂, R₁₃ and R₁₄ is methyl, the total carbon atom number of the remaining two substituents is from 6 to 8; preferably, R₁₂ is methyl, R₁₃ is n-pentyl, and R₁₄ is methyl; or R₁₂ is methyl, R₁₃ is n-hexyl, and R₁₄ is methyl.

According to a particularly preferred embodiment of the invention, R₁, R₇, R₈ and R₁₁ are each independently H; R₂ is H; R₃ and R₄ are each independently methyl; R₅ is methylene; R₆ is H or Na; R₉ is H; R₁₀ is H or methyl; R₁₂, R₁₃ and R₁₄ are each independently methyl.

In some preferred embodiments of the invention, formula 1 represents 2-acrylamido-2-methylpropane sulfonic acid and/or sodium 2-acrylamido-2-methylpropane sulfonate.

In some preferred embodiments of the present invention, formula 2 represents acrylamide and/or methacrylamide.

In some preferred embodiments of the present invention, formula 3 represents N-vinylformamide and/or N-vinylacetamide.

In some preferred embodiments of the present invention, formula 4 is preferably at least one selected from the group consisting of vinyl pivalate, vinyl neononanoate, and vinyl neodec anoate.

According to a preferred embodiment of the invention, based on the total weight of the alkenyl monomer, the structural unit D' is contained in an amount of 0.1-2wt%, such as 0.1wt%, 0.2wt%, 0.3wt%, 0.5wt%, 0.8wt%, 1wt%, 1.2wt%, 1.5wt%, 1.8wt%, 2wt%, and a random value within the range consisting of any two numerical values mentioned above.

According to preferred embodiments of the invention, based on the total weight of the alkenyl monomer, the structural unit A' is contained in an amount of not less than 60wt%, e.g., 60wt%, 65wt%, 70wt%, 75wt%, 80wt%, 84wt%, 85wt%, 88wt%, 90wt%, and a random value within the range consisting of any two numerical values mentioned above.

According to a preferred embodiment of the invention, the structural unit A' is contained in an amount of 65-90wt%, the structural unit B' is contained in an amount of 5-30wt%, the structural unit C' is contained in an amount of 1-8wt%, the structural unit D' is contained in an amount of is 0.1-2wt%, based on the total weight of said alkenyl monomer.

Based on the total weight of the alkenyl monomer, the structural unit A' is contained in an amount of 65-90wt%, such as 65wt%, 70wt%, 75wt%, 80wt%, 84wt%, 85wt%, 88wt%, 90wt%, and a random value within the range consisting of any two numerical values mentioned above, preferably 70-84wt%; the structural unit B' is contained in an amount of 5-30wt%, e.g., 5wt%, 10wt%, 15wt%, 20wt%, 25wt%, 30wt%, and a random value within the range consisting of any two numerical values mentioned above, preferably 12-25wt%; the structural unit C' is contained in an amount of 1-8wt%, such as 1wt%, 2wt%, 3wt%, 4wt%, 5wt%, 6wt%, 7wt%, 8wt%, and a random value within the range consisting of any two numerical values mentioned above, preferably 3-6wt%; the structural unit D' is contained in an amount of is 0.1-2wt%, e.g., 0.1wt%, 0.2wt%, 0.3wt%, 0.5wt%, 0.8wt%, 1wt%, 1.2wt%, 1.5wt%, 1.8wt%, 2wt%, and a random value within the range consisting of any two numerical values mentioned above, preferably 0.2-1wt%.

According to the invention, the weight ratio of the monomer A', the monomer B', the monomer C', the monomer D' is 1: (0.01-1): (0.01-0.2): (0.0005-0.06), preferably 1: (0.08-0.6): (0.02-0.15): (0.0008-0.04).

According to the invention, the initiator may be selected from various initiators commonly used in the art, for example, the initiator may be selected from azo-based initiators and/or redox-based initiators.

According to the present invention, the azo-based initiator is preferably a water-soluble azo-based initiator. The redox initiator includes an oxidizing agent and a reducing agent, the reducing agent is an inorganic reducing agent and/or an organic reducing agent, and the weight ratio of the oxidizing agent to the reducing agent is (0.1-1):1.

Preferably, the water-soluble azo-based initiator is at least one selected from the group consisting of 2,2'-azo-bis (2-amidinopropane) dihydrochloride, 2,2'-azo-bis (2-imidazolidinopropane) dihydrochloride, and 4,4'-azo-bis (4-cyanovaleric acid). Preferably, the oxidizing agent is at least one selected from the group consisting of benzoyl peroxide, hydrogen peroxide, t-butyl hydrogen peroxide, 2,5-dimethyl-2,5-bis (hydrogen peroxide) hexane, ammonium persulfate, sodium persulfate, and potassium persulfate. Preferably, the inorganic reducing agent is at least one selected from the group consisting of ferrous sulfate, ferrous ammonium sulfate, cuprous chloride, potassium sulfite, sodium sulfite, ammonium bisulfite, potassium bisulfite, sodium thiosulfate, potassium thiosulfate, sodium formaldehyde sulfoxylate (rongalite), and sodium bisulfite. Preferably, the organic reducing agent is at least one selected from the group consisting of N,N-dimethyl ethanol amine, N,N'-dimethyl piperazine, N,N,N',N'-tetramethyl urea, and N,N,N',N'-tetramethyl ethylene diamine.

According to the present invention, wherein the initiator is used in an amount of 0.0003-0.05wt% relative to the weight of said alkenyl monomer. Preferably, the azo-based initiator is used in an amount of 0.0001-0.1wt% based on the weight of said alkenyl monomer. Preferably, the redox initiator is used in an amount of 0.0002-0.3wt% based on the weight of said alkenyl monomer.

According to the invention, in a case of preferably, an emulsifier is further contained in the method, the emulsifier is capable of desirably dispersing the monomer D' and serving to solubilize the monomer D'. The emulsifier includes one or more selected from the group consisting of Tween 60, Tween 80, sodium lauryl sulfate, and sodium lauryl benzene sulfonate; and the emulsifier is used in an amount of 5-30 times by weight of the monomer D', based on the weight of the added monomer D'.

According to the present invention, the solution polymerization reaction conditions are arranged such that the viscosity average molecular weight of the obtained copolymer is as previously mentioned. Preferably, the solution polymerization reaction conditions comprise: a starting temperature from -10°C to 30°C, a time of 2-12h, and a pH of 4-8. Preferably, the solution polymerization reaction conditions comprise: a starting temperature from -5°C to 10°C, a time of 3-10h, and a pH of 5-7.

In the present invention, the pH of said polymerization reaction can be adjusted using an alkali metal hydroxide (e.g., sodium hydroxide, potassium hydroxide). It is understandable that R₃ in the structural unit A (monomer A') can be converted from H to an alkali metal element (e.g., Na) by adjusting the pH value using an alkali metal hydroxide, in addition, R₃ in said structural unit A in the copolymer of the present invention can also have both H and an alkali metal structural unit by controlling the dosage of alkali metal hydroxide. In the sulfonic acid type copolymer of the invention, R₉ is partially H and partially alkali metal element.

According to the invention, the ratio between the total weight of the ethylene monomers and the total weight of said solvent and said ethylene monomers at the start of the solution polymerization reaction is (0.3-0.55):1, preferably (0.35-0.5):1.

According to the invention, in order to better control the induction period, and reduce the inhibition effect of the dissolved oxygen, the polymerization reaction is preferably carried out in an inert atmosphere, which may be provided by nitrogen gas and/or an inert gas.

According to the present invention, for controlling the foam in the reaction system, the polymerization reaction is carried out in the presence of a defoaming agent. The defoaming agent may be used in an amount of 0.05-1wt% based on the dosage of said alkenyl monomer. The defoaming agent may be selected from various defoaming agents commonly used in the field.

According to the present invention, the method may further comprise: granulating, drying, pulverizing and sieving the copolymer colloid obtained from the polymerization reaction to obtain a copolymer product.

According to the invention, the drying conditions comprise a temperature of 40-70°C, preferably 45-65°C. In the present invention, the drying time is not particularly limited and may be dried to a solid content of 85-95wt%, preferably 88-90wt%, the drying time is generally within the range of 2-24h.

The fourth aspect of the present invention provides a copolymer produced with the aforementioned method according to the third aspect.

In the present invention, the content of each structural unit in the copolymer may be measured with the conventional methods in the prior art, such as infrared spectroscopy, nuclear magnetism, etc. alternatively, the content of each structural unit in the copolymer may be determined based on the feeding amount of said monomer. In particular, the content of each structural unit in the copolymer may be determined by measuring the content of unreacted monomer to determine the feeding ratio of monomers that are actually involved in the polymerization. Further, in the present invention, when the measured content of each unreacted monomer in the copolymer is below 0.02wt% of its content, it indicates that substantially all the monomers are involved in the polymerization reaction. In particular, the content of residual monomer may be determined by liquid chromatography.

The invention also provides a use of the aforementioned copolymer in the exploitation of oil reservoirs.

According to the invention, the oil reservoir is a high temperature, high salinity oil reservoir, preferably a carbonate rock oil reservoir.

According to the invention, the oil reservoir has a temperature within the range of 60-160°C, preferably within the range of 70-160°C, a mineralization degree less than or equal to 300,000mg/L, and a concentration of calcium and magnesium ions less than or equal to 10,000mg/L.

Preferably, the oil reservoir has a temperature within the range of 70-160°C, a mineralization degree within the range of 1,000-300,000mg/L, and a concentration of calcium and magnesium ions within the range of 1,00-10,000mg/L.

The present invention further provides a use of the profile control and flooding system comprising a cross-linking agent and an aforementioned sulfonic acid type copolymer as a flow control agent or a plugging control agent in the exploitation of an oil reservoir.

The fifth aspect of the present invention provides a profile control and flooding system comprising a cross-linking agent, and the aforementioned copolymer.

The copolymers of the present invention can slowly release the cross-linking groups after aging at a high temperature, after injection of the copolymer into the oil reservoir together with the cross-linking agent, an initial low viscosity is achieved, and during migration, cross-linking groups are continuously released by means of slow hydrolysis, thereby achieving stepwise tackifying; in addition, the profile control and flooding system maintains certain viscosity and strength, so that deep profile control and flooding are achieved.

According to the invention, the cross-linking groups released after aging at a high temperature refer to carboxyl and amine groups produced after hydrolysis of the copolymer.

According to the present invention, the profile control and flooding system is suitable for a carbonate rock oil reservoir, in particular suitable for flow control and plugging of the carbonate rock oil reservoir.

According to the present invention, the profile control and flooding system may further comprise a solvent, which is water. The solvent may be contained in an amount of 97-99.6wt%, preferably 98.3-99.1wt%.

In some embodiments of the invention, the profile control and flooding system comprises a cross-linking agent and a sulfonic acid type copolymer described above. The profile control and flooding system of the invention is particularly suitable for the flow control and plugging of the carbonate rock oil reservoir.

In the invention, based on the total weight of the profile control and flooding system, the content of said sulfonic acid type copolymer is preferably within the range of 0.3-1.5wt%, e.g., 0.3wt%, 0.5wt%, 0.8wt%, 1wt%, 1.2wt%, 1.5wt%, and a random value within the range consisting of any two numerical values mentioned above, more preferably within the range of 0.5-1.2wt%.

In the present invention, based on the total weight of the profile control and flooding system, the cross-linking agent is preferably contained in an amount of 0.01-2wt%, such as 0.01wt%, 0.02wt%, 0.05wt%, 0.1wt%, 0.5wt%, 1wt%, 1.2wt%, 1.5wt%, 1.8wt%, 2wt%, and within the range and range formed by any two of the above values, more preferably 0.02-1.5wt%.

In the invention, the cross-linking agent may be selected from those substances commonly known in the art which can crosslink the sulfonic acid-type copolymer, for example, the cross-linking agent is at least one selected from the group consisting of an organometallic type cross-linking agent, a phenolic cross-linking agent, and an aldehyde type cross-linking agent.

According to a more preferred embodiment of the present invention, the organometallic cross-linking agent is a cross-linking agent formed by metal ions and an organic ligand compound. Preferably, the metal ion is at least one selected from the group consisting of aluminum, chromium, zirconium, iron, and titanium. Preferably, the organic ligand compound is at least one selected from the group consisting of an organic acid and an organic amine, more preferably at least one selected from the group consisting of citric acid, oxalic acid, acetic acid, lactic acid, polyene polyamine, and triethanolamine.

Further preferably, the organometallic cross-linking agent is at least one selected from the group consisting of chromium citrate, chromium oxalate, chromium lactate, zirconium citrate, zirconium lactate, n-propanol zirconate, aluminum citrate, and aluminum lactate.

The copolymer of the present invention can form a profile control and flooding system with an organometallic cross-linking agent, the profile control and flooding system can be used as a flow control agent, it still have a high viscosity and excellent stability after aging at the temperature of 70-130°C for 60 days under the environment with a mineralization degree less than or equal to 300,000 mg/L and a calcium-magnesium ion content less than or equal to 10,000 mg/L, thus the copolymer can be used in the carbonate rock oil reservoirs to implement the flow channel adjustment.

According to the invention, the phenol type cross-linking agent and the aldehyde type cross-linking agent may be provided by the same substance, such as at least one of a water-soluble phenolic resin, a sulfonated phenolic resin, preferably a sulfonated phenolic resin.

According to a further preferred embodiment of the invention, said phenolic cross-linking agent is at least one selected from the group consisting of phenol, cresol (e.g., o-cresol, m-cresol, p-cresol), hydroquinone, catechol, resorcinol, more preferably hydroquinone.

According to a more preferred embodiment of the invention, the aldehyde type cross-linking agent is at least one selected from the group consisting of formaldehyde, acetaldehyde, paraformaldehyde, hexamethylenetetramine (heated to release formaldehyde) and furfuraldehyde, more preferably hexamethylenetetramine.

The copolymer of the present invention can form a profile control and flooding system with the phenol type cross-linking agent and aldehyde type cross-linking agent, the copolymer has a low dehydration rate and a high storage modulus after aging at the temperature of 140-160°C for 90 days under the environment with a mineralization degree less than or equal to 300,000 mg/L and a calcium-magnesium ion content less than or equal to 10,000 mg/L, it demonstrates that the copolymer has a high strength and desirable thermal stability, can be used as an ultra-deep well plugging control agent for the carbonate oil reservoirs.

In the present invention, the phenol type cross-linking agent and the aldehyde type cross-linking agent may be provided by different substances, further preferably, the weight ratio of said phenol type cross-linking agent and the aldehyde type cross-linking agent is 1: (0.6-1.5).

In the present invention, the profile control and flooding system may further comprise an oxygen scavenger. The oxygen scavenger may be contained in an amount of 0.005-0.3wt%, preferably 0.02-0.25wt%, based on the total weight of the profile control and flooding system. The kind and dosage of said oxygen scavenger may be selected with reference to the prior art. Preferably, the oxygen scavenger in the present invention is at least one selected from the group consisting of sodium thiosulfate, sodium sulfite, sodium bisulfite, rongalite (sodium dithionite), erythorbic acid and thiourea.

In the invention, water is used as a solvent and a reaction medium in the copolymer, and the present invention does not impose particular limitations to its selection. The water may be natural water or man-made water, wherein the natural water can be river water, lake water, atmospheric water, sea water, and underground water; the man-made water may be tap water, distilled water, deionized water, or heavy water.

During actual use, the water in use is typically water at the oilfield site (formation water) or its corresponding simulated brine. Preferably, the water has a mineralization degree within the range of 1,000-30,0000mg/L and a content of calcium and magnesium ions within the range of 100-10,000mg/L.

The invention will be described in detail below with reference to examples, but the protection scope of the invention is not limited to the following embodiments.

Unless otherwise specified, the specific conditions in the following examples, use examples and comparative examples were carried out according to conventional conditions or the conditions recommended by the manufacturers. The reagents or instruments in use that did not indicate the manufacturer, they were commercially available conventional products.

In the following use examples, the simulated brine was formulated according to the applicable reservoir environment, the simulated brine had a mineralization degree within the range of 100,000-300,000mg/L, and a concentration of calcium and magnesium ions within the range of 5,000-10,000mg/L (it shall be understood that the mineralization degree was an approximate value).

The 2-acrylamido-2-methyl propanesulfonic acid and sodium 2-acrylamido-2-methyl propane sulfonate in the monomer A' were purchased from Shandong Weifang Jinshi Environmental Protection technology Co., Ltd.

The monomer B' acrylamide was purchased from Dongying Baomo Environmental Engineering Co., Ltd.

The monomer C' was purchased from Shanghai Macklin Biochemical Technology Co., Ltd.

The monomer D' was purchased from Sigma-Aldrich Inc.

Aluminum citrate, zirconium citrate and zirconium lactate were purchased from Guangdong Weng Jiang Chemical Reagents Co., Ltd.

Chromium citrate and chromium lactate were commercially available from Shandong Shida Oilfield Technology Service Co., Ltd.

Unless otherwise specified herein, the reagents and materials used in the following use examples were commercially available. The defoaming agent in use was an organic silicone defoaming agent purchased from Hai-an Petrochemical Plant in Jiangsu Province of China.

The test methods were as follows:
1) Viscosity average molecular weight: tested by using the viscosimeter Lauda Proline PVS 2.59 manufactured in Germany according to the method specified in the China National Standard GB/T 12005.10-92 "Determination for molecular weight of polyacrylamide by viscometry".
2) Calculation of hydrolysis rate: according to the China National Standard GB/T 12005.6-1989 "Determination of hydrolysis degree of partly hydrolyzed polyacrylamide" (end-point of titration was pH =3), the specific steps were as follows:
   (a) A certain mass of the solution of copolymer after high temperature aging was measured with reference to the China National Standard GB/T 12005.6-1989 "Determination of hydrolysis degree of partly hydrolyzed polyacrylamide" (end-point of titration was pH =3), the consumption volume V₁ of hydrochloric acid (total consumption volume of hydrochloric acid by acrylate and formate or acetate structural units) was obtained.
   (b) The equivalent mass of the solution of copolymer after high temperature aging was initially purified by using a dialysis membrane (with a molecular weight cut-off: 3,500, Solarbio brand) to remove sodium formate (or sodium acetate) generated from the hydrolysis process, and then subjected to rotary evaporation to remove most of the moisture, freeze-dried and pulverized to obtain a sample of aged copolymer powder, and then measured with reference to the China National Standard GB/T 12005.6-1989 "Determination of hydrolysis degree of partly hydrolyzed polyacrylamide" (end-point of titration was pH =3), the consumption volume V₂ of hydrochloric acid (consumption volume of hydrochloric acid by acrylate) was obtained, on this basis, the hydrolysis rate of structural unit B was calculated.
   (c) The consumption volume of hydrochloric acid by formate or acetate was calculated based on the formula V₃ = V₁ - V₂, and the hydrolysis rate of the structural unit C after high temperature aging was calculated with reference to the hydrolysis rate formula in the China National Standard GB/T 12005.6-1989 "Determination of hydrolysis degree of partly hydrolyzed polyacrylamide".

Hydrolysis rate of the structural unit B containing acylamino group in the copolymer referred to the percentage of the mass of said structural unit which generated carboxyl by hydrolysis relative to the initial mass of the copolymer, the calculation formula was as follows:

Hydrolysis rate of the structural unit B containing acylamino group = mass of the structural unit corresponding to carboxyl / the mass of copolymer ×100% = C_{HCl}·V₂·71·100 / (1000·m·s+M₂·C_{HCl}·V₃-23·C_{HCl}·V₂); wherein C_{HCl} denoted the concentration of hydrochloric acid standard solution, mol/L; V₂ denoted the consumption volume of hydrochloric acid by the acrylate generated from the hydrolysis, mL; m denoted the mass of sample, g; s denoted the solid content of sample, wt%; M₂ denoted the difference in chain mass before and after the hydrolysis of the structural unit C; V₃ denoted the consumption volume of hydrochloric acid by formate or acetate generated from the hydrolysis, mL.

The hydrolysis growth rate of the structural units containing acylamino group = (hydrolysis rate after aging for 60 days - hydrolysis rate after aging for 15 days) / hydrolysis rate after aging for 15 days ×100%.

Hydrolysis rate of the structural unit C containing aminoacyl group in the copolymer was calculated based on the following formula:

Hydrolysis rate of the structural unit C containing aminoacyl group = C_{HCl}·V₃·M_{1·}100/(1000·m·s+M₂·C_{HCl}·V₃-23·C_{HCl}·V₂); wherein C_{HCl} denoted the concentration of hydrochloric acid standard solution, mol/L; V₃ denoted the consumption volume of hydrochloric acid by the formate or acetate generated from the hydrolysis, mL; m denoted the mass of sample, g; s denoted the solid content of sample, wt%; M₁ denoted the mass of structural unit C corresponding to 1mL of the standard solution of hydrochloric acid (C_{HCl} = 1.0mol/L); and M₂ denoted the difference in chain mass before and after the hydrolysis of the structural unit C. When X in the structural unit C was NH, R₅ was H, M₁ was 71, M₂ was 28; when X was NH, R₅ was methyl, M₁ was 85, M₂ was 42.

The total hydrolysis rate of the copolymer referred to the percentage of the total mass of the structured units hydrolyzed to produce carboxyl and amine groups relative to an initial mass of the copolymer, the calculation formula was follows: total hydrolysis rate = hydrolysis rate of structured unit B + hydrolysis rate of structured unit C = total mass of the structured units corresponding to carboxyl and amine groups / (initial mass of the copolymer) ×100%.

The calculated formula of total hydrolysis increase rate of the copolymer was as follows: total hydrolysis increase rate = (total hydrolysis rate of copolymer after aging for 60 days - total hydrolysis rate of copolymer after aging for 15 days) / total hydrolysis rate of copolymer after aging for 15 days ×100%.

3) The viscosity after aging of the profile control and flooding system: the polymer gel formation solution formed by the copolymer and a metal cross-linking agent was placed in an airtight stainless steel reaction kettle, which was disposed in a constant temperature oven with a temperature (e.g., 130°C) for carrying out the reaction, after a predetermined period (e.g., 60 days), the stainless steel reaction kettle was removed from the constant temperature oven, the viscosity was measured.

4) Viscosity increase rate of profile control and flooding system: the viscosity at a shear rate of 7.34S⁻¹ was measured by using a Brookfield R/S Rheometer at a temperature of 30°C; wherein the viscosity increase rate was calculated according to the following formula: viscosity increase rate = (viscosity after aging - initial viscosity) / initial viscosity ×100%.

5) Storage modulus of the profile control and flooding system: the gel strength of the profile control and flooding system was reflected by measuring a storage modulus of the system with the rheological method according to the China Petroleum Industry Standard SY/T 6296-1997 "Determination of the strength of polymer gels used for oil production - Method on rheological parameters", test instrument: HAAKE RS6000 rheometer.

6) Dehydration rate of the profile control and flooding system: the polymer gel formation solution formed by the copolymer and a metal cross-linking agent was placed in an airtight stainless steel reaction kettle, which was disposed in a constant temperature oven with a temperature (e.g., 150°C) for carrying out the reaction, after a predetermined period (e.g., 90 days), the stainless steel reaction kettle was removed from the constant temperature oven and cooled, the mass of the removed water was weighed by a balance, the dehydration rate denoted the ratio of the mass of the removed water to the mass of the initial gel formation solution. The dehydration rate was used to characterize the thermal stability of said profile control and flooding system, the lower dehydration rate indicates the stronger stability.

### Example 1

(1) 86.5g of monomer A', 27.8g of monomer B', 5g of monomer C', and 0.6g of monomer D' were taken, wherein the monomer A' was sodium 2-acrylamido-2-methylpropane sulfonate; monomer B' was acrylamide; monomer C' had a structure represented by formula 3, wherein R₈, R₉, and R₁₀ were each H; monomer D' had a structure represented by formula 4, wherein R₁₁ was H; R₁₂, R₁₃, and R₁₄ were each methyl; 9g of sodium lauryl sulfate was added, and dissolved in 171.1g of deionized water, the pH value was adjusted to 6 by using a sodium hydroxide solution, the starting temperature was controlled to 2°C, 0.3g of a defoaming agent was added, nitrogen gas was introduced into the system for 20min to remove oxygen gas, the system was then added with 1g of 2,2-azobis (2-amidinopropane) dihydrochloride solution with a concentration of 0.25wt%, 2g of an aqueous ammonium persulfate solution with a concentration of 0.2wt%, and 1.5g of an aqueous sodium bisulfite solution with a concentration of 0.3wt% to initiate the polymerization, after the system temperature was raised by 0.5°C, the blowing of nitrogen bubbles was stopped, and the reaction was continued for 4 hours;
(2) After polymerization was completed, the resulting colloid was granulated, dried at a temperature 50°C till a solid content of 89wt%, then crushed and sieved, a sulfonic acid type copolymer dry powder product was obtained.

The measured viscosity average molecular weight of the dry powder product was 14,800,000.

In addition, it was determined based on the calculation of feeding amount that the prepared sulfonic acid type copolymer contained the following ingredients:
Structural unit A (represented by formula I, wherein R₁ and R₂ were both H, R₃ and R₄ were both methyl, R₅ was methylene, R₆ was Na); structural unit B (represented by formula II, wherein R₇ was H); structural unit C (represented by formula III, wherein R₈, R₉ and R₁₀ were each H); structural unit D (represented by formula IV, wherein R₁₁ was H, R₁₂, R₁₃ and R₁₄ were each methyl);
The structural unit A was contained in an amount of 72.1wt%, the structural unit B was contained in an amount of 23.2wt%, the structural unit C was contained in an amount of 4.2wt%, the structural unit D was contained in an amount of 0.5wt%, based on the total weight of the sulfonic acid type copolymer; in the structural unit A, the molar content of S was 4.9%, the content by weight of sulfonic acid group was 25.2wt%; the molar content of the group C-O-CO- in the tertiary carbonate group of structural unit was 0.27% of all the carbon chemical bonds, the content by weight of the tertiary carbonate group was 0.39wt%.

According to the aforementioned method for detecting structural units contained in a polymer, the polymer was detected by using an X-ray photoelectron spectroscopy (XPS), the atomic ratio of C, N, O, S was 11.1:2.5:5.6:1, based on the total weight of the elements in the sulfonic acid type copolymer, the molar content of S in the structural unit A was 4.95%, the content by weight of sulfonic acid group was 25.4wt%; the molar content of the group C-O-CO- in the tertiary carbonate group of structural unit was 0.28% of all the carbon chemical bonds, the content by weight of the tertiary carbonate group was 0.41wt%. As can be seen, the aforementioned detection results were similar to those obtained by the calculation based on the feeding amount.

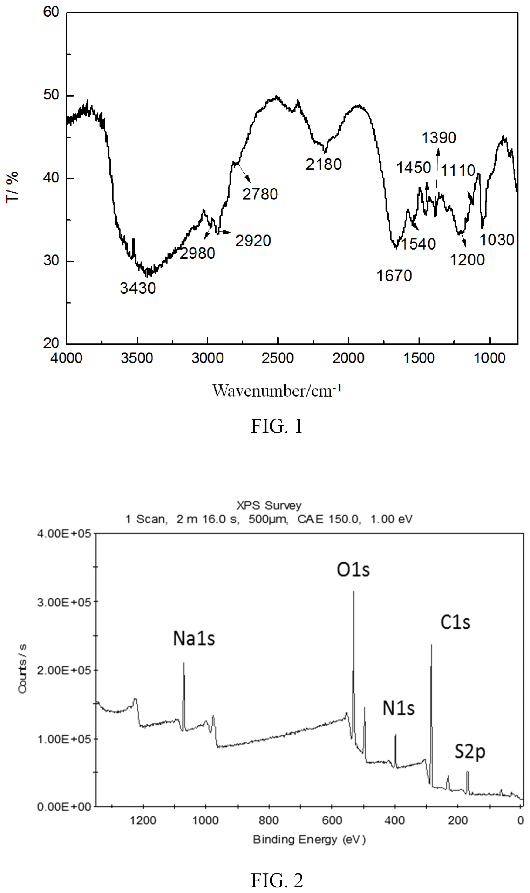

The sulfonic acid type copolymer dry powder product obtained in the above step (2) was washed with acetic acid, the unreacted monomer was removed, and then tested by using TENSOR 27 type infrared spectrometer (Bruker, Germany), an infrared spectrogram as shown in FIG. 1 was obtained, as illustrated by FIG. 1, the stretching vibration peaks for -NH₂ and -NH in structural unit B and structural unit C were presented at 3430cm⁻¹; the anti-symmetric contraction vibration peak and symmetric contraction vibration peak for -CH₃ and-CH₂ in structural unit A and structural unit D were presented at 2980cm⁻¹ and 2920cm⁻¹ respectively; the stretching vibration peaks for C-H in the aldehyde group of structural unit C were presented at 2780cm⁻¹; the stretching vibration peaks for -C=O in structural unit A, structural unit B, and structural unit C were presented at 1670cm⁻¹; the characteristic absorption peaks for -CONH-C- in a secondary amide of structural unit A were presented at 1540cm⁻¹; the bending vibration peaks for C-H in the-CH₃ group of structural unit A were presented at 1450cm⁻¹ and 1390cm⁻¹ respectively; the anti-symmetric contraction vibration peak and symmetric contraction vibration peak for C-O-C in structural unit D were presented at 1200cm⁻¹ and 1030cm⁻¹ respectively; the stretching vibration peaks for S=O in structural unit A were presented at 1110cm⁻¹, it confirmed that the prepared copolymer included structural units A, B, C and D.

### Example 2

(1) 95g of monomer A', 24g of monomer B', 6g of monomer C', and 1.2g of monomer D' were taken, wherein the monomer A' was sodium 2-acrylamido-2-methylpropane sulfonate; monomer B' was acrylamide; monomer C' had a structure represented by formula 3, wherein R₈, R₉ were each H, and R₁₀ was methyl; monomer D' had a structure represented by formula 4, wherein R₁₁ was H; R₁₂ was methyl, R₁₃ was n-pentyl, and R₁₄ was methyl; 6.5g of sodium lauryl sulfate was dissolved in 173.8g of deionized water, the pH value was adjusted to 6 by using a sodium hydroxide solution, the starting temperature was controlled to 8°C, 0.4g of a defoaming agent was added, nitrogen gas was introduced into the system for 20min to remove oxygen gas, the system was then added with 1.4g of 2,2-azobis (2-amidinopropane) dihydrochloride solution with a concentration of 0.25wt%, 2g of an aqueous ammonium persulfate solution with a concentration of 0.2wt%, and 1.7g of an aqueous sodium bisulfite solution with a concentration of 0.3wt% to initiate the polymerization, after the system temperature was raised by 0.5°C, the blowing of nitrogen bubbles was stopped, and the reaction was continued for 4 hours;
(2) After polymerization was completed, the resulting colloid was granulated, dried at a temperature 50°C till a solid content of 89wt%, then crushed and sieved, a sulfonic acid type copolymer dry powder product was obtained.

The measured viscosity average molecular weight of the dry powder product was 12,450,000.

In addition, it was determined based on the calculation of feeding amount that the prepared sulfonic acid type copolymer contained the following ingredients:
Structural unit A (same as that in Example 1);
Structural unit B (same as that in Example 1);
Structural unit C (represented by formula III, wherein R₈ and R₉ were both H, R₁₀ was methyl);
Structural unit D (represented by formula IV, wherein R₁₁ was H, R₁₂ was methyl, R₁₃ was n-pentyl, R₁₄ was methyl);

Wherein the structural unit A was contained in an amount of 75.3wt%, the structural unit B was contained in an amount of 19.0wt%, the structural unit C was contained in an amount of 4.75wt%, the structural unit D was contained in an amount of 0.95wt%, based on the total weight of the sulfonic acid type copolymer; in the structural unit A, the molar content of S was 5.2%, the content by weight of sulfonic acid group was 26.3wt%; the molar content of the group C-O-CO- in the tertiary carbonate group of structural unit was 0.35% of all the carbon chemical bonds, the content by weight of the tertiary carbonate group was 0.81wt%.

According to the aforementioned method for detecting structural units contained in a polymer, the polymer was detected by using an X-ray photoelectron spectroscopy (XPS), the detection results were similar to those obtained by the calculation based on the feeding amount.

### Example 3

(1) 91.7g of monomer A', 14.8g of monomer B', 6.5g of monomer C', and 0.3g of monomer D' were taken, wherein the monomer A' and the monomer B' were same as those in Example 1; monomer C' was same as that in Example 1; monomer D' had a structure represented by formula 4, wherein R₁₁ was H; R₁₂ was methyl, R₁₃ was n-hexyl, and R₁₄ was methyl; 6.6g of Tween 80 was dissolved in 180.1g of deionized water, the pH value was adjusted to 6 by using a sodium hydroxide solution, the starting temperature was controlled to 5°C, 0.2g of a defoaming agent was added, nitrogen gas was introduced into the system for 20min to remove oxygen gas, the system was then added with 1g of 2,2-azobis (2-amidinopropane) dihydrochloride solution with a concentration of 0.25wt%, 2g of an aqueous ammonium persulfate solution with a concentration of 0.2wt%, and 1.8g of an aqueous sodium bisulfite solution with a concentration of 0.3wt% to initiate the polymerization, after the system temperature was raised by 0.5°C, the blowing of nitrogen bubbles was stopped, and the reaction was continued for 4 hours;
(2) After polymerization was completed, the resulting colloid was granulated, dried at a temperature 50°C till a solid content of 89wt%, then crushed and sieved, a sulfonic acid type copolymer dry powder product was obtained.

The measured viscosity average molecular weight of the dry powder product was 14,320,000.

In addition, it was determined based on the calculation of feeding amount that the prepared sulfonic acid type copolymer contained the following ingredients:
Structural unit A (same as that in Example 1); structural unit B (same as that in Example 1);
Structural unit C (same as that in Example 1);
Structural unit D (represented by formula IV, wherein R₁₁ was H, R₁₂ was methyl, R₁₃ was n-hexyl, R₁₄ was methyl);

Wherein the structural unit A was contained in an amount of 80.9wt%, the structural unit B was contained in an amount of 13.1wt%, the structural unit C was contained in an amount of 5.7wt%, the structural unit D was contained in an amount of 0.3wt%, based on the total weight of the sulfonic acid type copolymer; in the structural unit A, the molar content of S was 5.6%, the content by weight of sulfonic acid group was 28.3wt%; the molar content of the group C-O-CO- in the tertiary carbonate group of structural unit was 0.11% of all the carbon chemical bonds, the content by weight of the tertiary carbonate group was 0.26wt%.

According to the aforementioned method for detecting structural units contained in a polymer, the polymer was detected by using an X-ray photoelectron spectroscopy (XPS), the detection results were similar to those obtained by the calculation based on the feeding amount.

### Example 4

(1) 84.9g of monomer A' (same as that in Example 1), 31.3g of monomer B' (methacrylamide), 2.4g of monomer C'(same as that in Example 1), and 1.7g of monomer D' (same as that in Example 1) were taken, 17g of sodium dodecyl sulfate was dissolving in 162.7g of deionized water, the pH value was adjusted to 6 by using a sodium hydroxide solution, the starting temperature was controlled to 2°C, 0.5g of a defoaming agent was added, nitrogen gas was introduced into the system for 20min to remove oxygen gas, the system was then added with 1.15g of 2,2-azobis (2-amidinopropane) dihydrochloride solution with a concentration of 0.25wt%, 2g of an aqueous ammonium persulfate solution with a concentration of 0.2wt%, and 1.5g of an aqueous sodium bisulfite solution with a concentration of 0.3wt% to initiate the polymerization, after the system temperature was raised by 0.5°C, the blowing of nitrogen bubbles was stopped, and the reaction was continued for 4 hours;
(2) After polymerization was completed, the resulting colloid was granulated, dried at a temperature 50°C till a solid content of 89wt%, then crushed and sieved, a sulfonic acid type copolymer dry powder product was obtained.

The measured viscosity average molecular weight of the dry powder product was 17,000,000.

In addition, it was determined based on the calculation of feeding amount that the prepared sulfonic acid type copolymer contained the following ingredients:
Structural unit A (same as that in Example 1); structural unit B (represented by formula II, wherein R₇ was methyl);
Structural unit C (same as that in Example 1); structural element D (same as that in Example 1);

Wherein the structural unit A was contained in an amount of 70.6wt%, the structural unit B was contained in an amount of 26wt%, the structural unit C was contained in an amount of 2wt%, the structural unit D was contained in an amount of 1.4wt%, based on the total weight of the sulfonic acid type copolymer; in the structural unit A, the molar content of S was 4.8%, the content by weight of sulfonic acid group was 24.7wt%; the molar content of the group C-O-CO- in the tertiary carbonate group of structural unit was 0.73% of all the carbon chemical bonds, the content by weight of the tertiary carbonate group was 1.1wt%.

According to the aforementioned method for detecting structural units contained in a polymer, the polymer was detected by using an X-ray photoelectron spectroscopy (XPS), the atomic ratio of C, N, O, S was 11.3:1.7:4.8:1, based on the total weight of the elements in the sulfonic acid type copolymer, the molar content of S in the structural unit A was 4.9%, the content by weight of sulfonic acid group was 25.2wt%; the molar content of the group C-O-CO- in the tertiary carbonate group of structural unit was 0.78% of all the carbon chemical bonds, the content by weight of the tertiary carbonate group was 1.18wt%. As can be seen, the aforementioned detection results were similar to those obtained by the calculation based on the feeding amount.

### Example 5

(1) 100.1g of monomer A' (same as that in Example 1), 12g of monomer B' (same as that in Example 1), 7.8g of monomer C'(same as that in Example 1), and 0.1g of monomer D' (same as that in Example 1) were taken, 1g of sodium dodecyl sulfate was dissolving in 179g of deionized water, the pH value was adjusted to 6 by using a sodium hydroxide solution, the starting temperature was controlled to 2°C, 0.15g of a defoaming agent was added, nitrogen gas was introduced into the system for 20min to remove oxygen gas, the system was then added with 1.3g of 2,2-azobis (2-amidinopropane) dihydrochloride solution with a concentration of 0.25wt%, 2.2g of an aqueous ammonium persulfate solution with a concentration of 0.2wt%, and 1.7g of an aqueous sodium bisulfite solution with a concentration of 0.3wt% to initiate the polymerization, after the system temperature was raised by 0.5°C, the blowing of nitrogen bubbles was stopped, and the reaction was continued for 4 hours;
(2) After polymerization was completed, the resulting colloid was granulated, dried at a temperature 50°C till a solid content of 89wt%, then crushed and sieved, a sulfonic acid type copolymer dry powder product was obtained.

The measured viscosity average molecular weight of the dry powder product was 11,500,000.

In addition, it was determined based on the calculation of feeding amount that the prepared sulfonic acid type copolymer contained the following ingredients:
Structural unit A (same as that in Example 1); structural unit B (same as that in Example 1);
Structural unit C (same as that in Example 1); structural element D (same as that in Example 1);
Wherein the structural unit A was contained in an amount of 83.4wt%, the structural unit B was contained in an amount of 10wt%, the structural unit C was contained in an amount of 6.5wt%, the structural unit D was contained in an amount of 0.1wt%, based on the total weight of the sulfonic acid type copolymer; in the structural unit A, the molar content of S was 5.8%, the content by weight of sulfonic acid group was 29.1wt%; the molar content of the group C-O-CO- in the tertiary carbonate group of structural unit was 0.06% of all the carbon chemical bonds, the content by weight of the tertiary carbonate group was 0.08wt%.

According to the aforementioned method for detecting structural units contained in a polymer, the polymer was detected by using an X-ray photoelectron spectroscopy (XPS), the detection results were similar to those obtained by the calculation based on the feeding amount.

### Example 6

A copolymer was prepared according to the same method as that in Example 4, except that the addition amount of monomer A' was 71.8g, and the addition amount of monomer B' was 42.5g. The viscosity average molecular weight of the copolymer was 17,600,000.

In addition, it was determined based on the calculation of feeding amount that the prepared copolymer contained the structural unit A, the structural unit B, the structural unit C and the structural unit D which were the same as those in Example 4; the structural unit A was contained in an amount of 60.6wt%, the structural unit B was contained in an amount of 35.9wt%, the structural unit C was contained in an amount of 2.0wt%, the structural unit D was contained in an amount of 1.4wt%, based on the total weight of the copolymer; in the structural unit A, the molar content of S was 4.1%, the content by weight of sulfonic acid group was 21.2wt%; the molar content of the group C-O-CO- in the tertiary carbonate group of structural unit was 0.70% of all the carbon chemical bonds, the content by weight of the tertiary carbonate group was 1.1wt%.

According to the aforementioned method for detecting structural units contained in a polymer, the polymer was detected by using an X-ray photoelectron spectroscopy (XPS), the detection results were similar to those obtained by the calculation based on the feeding amount.

### Comparative Example D1

A copolymer was prepared according to the same method as that in Example 4, except that the addition amount of monomer A' was 31.3g, and the addition amount of monomer B' was 84.9g. Monomer C' and monomer D' were not added. The viscosity average molecular weight of the copolymer was 18,400,000.

In addition, it was determined based on the calculation of feeding amount that the prepared copolymer contained the structural unit A and the structural unit B which were the same as those in Example 4; the structural unit A was contained in an amount of 26.9wt%, the structural unit B was contained in an amount of 73.1wt%, based on the total weight of the copolymer; in the structural unit A, the molar content of S was 1.7%, the content by weight of sulfonic acid group was 9.4wt%.

### Comparative Example D2

A copolymer was prepared according to the same method as that in Example 4, except that the monomer C' was not added. The viscosity average molecular weight of the copolymer was 15,260,000.

In addition, it was determined based on the calculation of feeding amount that the prepared copolymer contained the structural unit A, the structural unit B and the structural unit D which were the same as those in Example 4; the structural unit A was contained in an amount of 72.0wt%, the structural unit B was contained in an amount of 26.6wt%, the structural unit D was contained in an amount of 1.4wt%, based on the total weight of the copolymer; in the structural unit A, the molar content of S was 4.9%, the content of sulfonic acid group was 25.2wt%, the content of tertiary carbonate group was 1.1wt%.

### Comparative Example D3

A copolymer was prepared according to the same method as that in Example 4, except that the monomer D' was not added. The viscosity average molecular weight of the copolymer was 16,200,000.

In addition, it was determined based on the calculation of feeding amount that the prepared copolymer contained the structural unit A, the structural unit B and the structural unit C which were the same as those in Example 4; the structural unit A was contained in an amount of 71.6wt%, the structural unit B was contained in an amount of 26.4wt%, the structural unit C was contained in an amount of 2.0wt%, based on the total weight of the copolymer; in the structural unit A, the molar content of S was 4.9%, the content of sulfonic acid group was 25.0wt%.

### Comparative Example D4

A copolymer was prepared according to the same method as that in Example 4, except that monomer D' was replaced with vinyl acetate. The viscosity average molecular weight of the copolymer was 15,650,000.

In addition, it was determined based on the calculation of feeding amount that the prepared copolymer contained the structural unit A, the structural unit B and the structural unit C which were the same as those in Example 4, as well as the structural unit 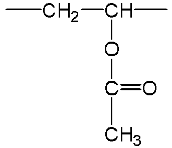 derived from vinyl acetate; based on the total weight of the copolymer, the structural unit A was contained in an amount of 70.6wt%, the structural unit B was contained in an amount of 26wt%, the structural unit C was contained in an amount of 2.0wt%, and the content of structural unit derived from vinyl acetate was 1.4wt%.

FIG. 2 and Table 1 showed the X-ray photoelectron spectrogram and the contents of elements in the sulfonic acid type copolymer obtained in Example 4, as illustrated by FIG. 2 and Table 1, the amounts of C, N, O, S, Na obtained from the X-ray photoelectron spectrogram were substantially consistent with the feeding amounts thereof.

**Table 1 Content of elements in the sulfonic acid type copolymer obtained in Example 4**

| Elements | binding energy (eV) | Atomic % | Feeding amount % | Error /% |
|---|---|---|---|---|
| C1s | 291.33 | 56.98 | 55.4 | 2.9 |
| N1s | 404.37 | 8.76 | 10.1 | 13.3 |
| O1s | 538.87 | 24.13 | 24.9 | 3.1 |
| S2p | 173.91 | 5.03 | 4.8 | 4.8 |
| Na1s | 1076.85 | 5.1 | 4.8 | 6.3 |

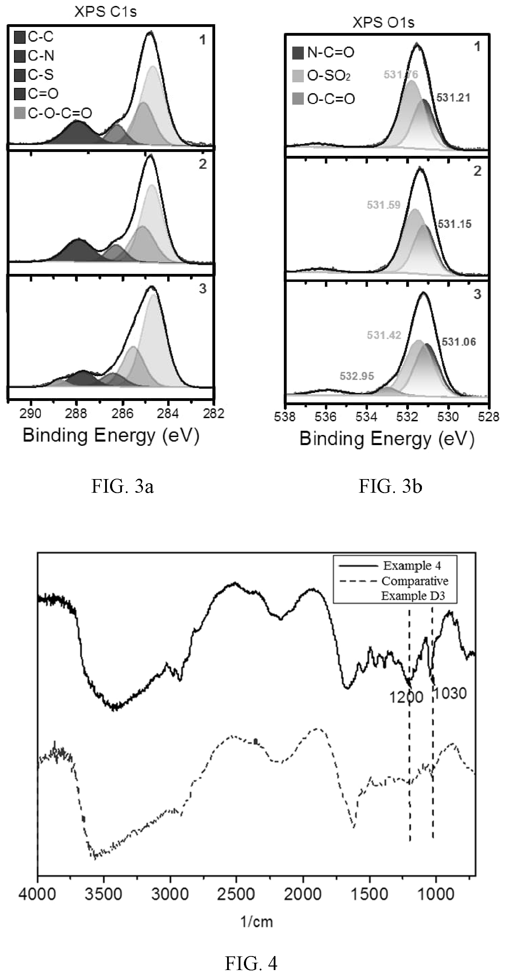

In FIG. 3a and FIG. 3b, FIG. 3a-1 and FIG. 3b-1 showed a fine spectrogram of sulfonic acid type copolymers C1s and O1s containing only structural units A and B respectively, FIG. 3a-2 and FIG. 3b-2 illustrated a fine spectrogram of C1s and O1s of sulfonic acid type copolymers containing only structural units A, B and C obtained in Comparative Example D3 respectively, FIG. 3a-3 and FIG. 3b-3 illustrated a fine spectrogram of C1s and O1s of sulfonic acid type copolymers containing structural units A, B, C and D obtained in Example 4; Table 2 and Table 3 showed the atomic ratios of the corresponding functional groups. As can be seen from FIG. 3a, a characteristic peak from the ester group C-O-C=O in the structural unit D was clearly visible at the binding energy 288.84 eV; as illustrated by FIG. 3b, a characteristic peak derived from the ester group O-C=O in the structural unit D was clearly visible at the binding energy of 532.95 eV.

**Table 2 Atomic ratio of various C-containing functional groups in C1s spectrogram**

| Functional groups | Binding Energy (eV) | XPS-fit (atomic %) |
|---|---|---|
| C-C | 284.63 | 58.65 |
| C-N | 285.53 | 21.75 |
| C-S | 286.41 | 7.46 |
| C=O | 287.81 | 11.36 |
| C-O-C=O | 288.84 | 0.78 |

**Table 3 Atomic ratio of various O-containing functional groups in O1s spectrogram**

| Functional groups | Binding Energy (eV) | XPS-fit (atomic %) |
|---|---|---|
| N-C=O | 531.06 | 43.7 |
| O-SO₂ | 531.42 | 54.7 |
| O-C=O | 532.95 | 1.6 |

In FIG. 4, curve a illustrated an infrared spectrogram of the sulfonic acid type copolymer obtained in Example 4; curve b illustrated an infrared spectrogram of the sulfonic acid type copolymer obtained in Comparative Example D3; as shown by FIG. 4, curve b had clearly visible peaks at 1200cm⁻¹ and 1030cm⁻¹, which were the anti-symmetric contraction vibration peak and the symmetric contraction vibration peak of C-O-C in the structural unit D.

### Test Example 1

The copolymers obtained in Examples 1-6 and Comparative Examples D1-D4 were prepared into copolymer solutions having a concentration of 5,000mg/L (prepared with deionized water), after aging at 130°C for 15-60 days, the total hydrolysis rate and the total hydrolysis growth rate of said copolymers and the hydrolysis rate and hydrolysis growth rate of the structural units B were measured, the results were shown in Table A1 and Table A2.

**Table A1 Total hydrolysis rate and total hydrolysis growth rate of the copolymers after aging at 130°C**

| No. | Total hydrolysis rate of the copolymers after aging at 130°C (%) | | | | Total hydrolysis growth rate from 15 days to 60 days (%) |
|---|---|---|---|---|---|
| | 15 days | 30 days | 45 days | 60 days | |
| Example 1 | 5.0 | 9.9 | 13.5 | 16.4 | 228 |
| Example 2 | 3.7 | 8.2 | 11.4 | 13.2 | 257 |
| Example 3 | 3.3 | 7.4 | 10.5 | 11.5 | 248 |
| Example 4 | 8.1 | 13.0 | 16.5 | 18.2 | 125 |
| Example 5 | 5.2 | 8.3 | 9.8 | 11.1 | 113 |
| Example 6 | 11.8 | 17.6 | 21.6 | 24.8 | 110 |
| Comparative Example D1 | 46.8 | 53.9 | 56.7 | 57.9 | 24 |
| Comparative Example D2 | 7.0 | 11.5 | 13.9 | 15.5 | 121 |
| Comparative Example D3 | 13.7 | 17.0 | 21.8 | 23.6 | 72 |
| Comparative Example D4 | 15.5 | 19.9 | 23.7 | 25.5 | 65 |

**Table A2 Hydrolysis rate and hydrolysis growth rate of the acylamino-containing structural unit after aging at 130°C**

| No. | Hydrolysis rate of the acylamino-containing structural unit (%) | | | | Hydrolysis growth rate from 15 days to 60 days (%) |
|---|---|---|---|---|---|
| | 5 days | 15 days | 30 days | 60 days | |
| Example 1 | 2.2 | 4.2 | 8.6 | 12.6 | 200 |
| Example 2 | 1.8 | 2.8 | 6.8 | 9.6 | 243 |
| Example 3 | 1.4 | 2.7 | 5.3 | 8.2 | 204 |
| Example 4 | 3.3 | 7.2 | 11.7 | 16.8 | 133 |
| Example 5 | 1.0 | 2.9 | 4.9 | 7.6 | 162 |
| Example 6 | 6.2 | 10.9 | 16.4 | 23.3 | 114 |
| Comparative Example D1 | 36.7 | 46.8 | 53.9 | 57.9 | 24 |
| Comparative Example D2 | 3.1 | 7.0 | 11.5 | 15.5 | 121 |
| Comparative Example D3 | 8.8 | 12.7 | 15.7 | 21.9 | 72 |
| Comparative Example D4 | 9.5 | 13.3 | 17.2 | 22.4 | 68 |

As can be seen from the results of Table A1 and Table A2, in contrast to the Comparative Examples, the sulfonic acid type copolymers prepared in Examples 1-6 of the present invention were mainly composed of the long branched chain-containing sulfonic acid group as the structural unit, the copolymers had strong resistance to hydrolysis at a high temperature of 130°C, and controllable hydrolysis rates. The release rate of the crosslinking group was low in the initial stage, and the total hydrolysis rate after aging for 15 days was not larger than 20%, wherein the hydrolysis rate of the acylamino-containing structural units after aging for 15 days was not larger than 15%; the crosslinking group was gradually released with an elapse of the aging time, the total hydrolysis growth rate from aging 15 days to aging 60 days was not lower than 90%, wherein the hydrolysis growth rate of the acylamino-containing structural units was not lower than 90%.

### Use Example 1

10g of the copolymer obtained in Example 1 was added into 900g of simulated brine, stirred at a rotational speed of 600rpm till complete dissolution of the copolymer, 0.5g of chromium citrate and 0.8g of chromium lactate were added and stirred to complete dissolution, 0.8g of sodium thiosulfate were added, the solution was replenished to a total weight of 1kg by using the simulated brine, and stirred uniformly to obtain a copolymer profile control and flooding system, which can be used as a flow control agent for performing the flow channel adjustment.

The simulated brine was selected with two different mineralization degrees and contents of calcium and magnesium ions, the first simulated brine had a mineralization degree of 300,000mg/L and a content of calcium and magnesium ions of 10,000mg/L, the second simulated brine had a mineralization degree of 100,000mg/L and a content of calcium and magnesium ions of 5,000mg/L.

The profile control and flooding system Al prepared with the simulated brine having a mineralization level of 300,000mg/L and content of calcium and magnesium ions of 10,000mg/L had an initial viscosity of 680mPa·s, the viscosity after aging at 70°C, 95°C and 130°C for 60 days was measured separately, the results were shown in Table A3; the initial viscosity of the profile control and flooding system Al, and the viscosity after aging and viscosity increase rate after aging at 130°C for 60 days were measured, the results were illustrated in Table A4.

The profile control and flooding system Al' prepared with the simulated brine having a mineralization level of 100,000mg/L and content of calcium and magnesium ions of 5,000mg/L had an initial viscosity of 910mPa·s, the viscosity after aging at 70°C, 95°C and 130°C for 60 days was measured separately, the results were shown in Table A3.

### Use Example 2

8.5g of the copolymer obtained in Example 2 was added into 900g of simulated brine (with a mineralization degree of 300,000mg/L and a content calcium and magnesium ions of 10,000mg/L), stirred at a rotational speed of 600rpm till complete dissolution of the copolymer, 0.5g of chromium citrate and 0.3g of zirconium citrate were added and stirred to complete dissolution, 0.4g of thiourea was further added, the solution was replenished to a total weight of 1kg by using the simulated brine (with a mineralization degree of 300,000mg/L and a content calcium and magnesium ions of 10,000mg/L), and stirred uniformly to obtain a sulfonic acid type copolymer profile control and flooding system A2, which can be used as a flow control agent for performing the flow channel adjustment.

The initial viscosity of the profile control and flooding system A2, the viscosity after aging at 130°C for 60 days and the viscosity increase rate were measured, the results were shown in Table A4.

### Use Example 3

9g of the copolymer obtained in Example 3 was added into 900g of simulated brine (with a mineralization degree of 300,000mg/L and a content calcium and magnesium ions of 10,000mg/L), stirred for 1h, 0.3g of aluminum citrate, 1g of chromium lactate, and 0.8g of sodium bisulfite were subsequently added, the solution was replenished to a total weight of 1kg by using the simulated brine (with a mineralization degree of 300,000mg/L and a content calcium and magnesium ions of 10,000mg/L), and stirred uniformly to obtain a sulfonic acid type copolymer profile control and flooding system A3, which can be used as a flow control agent for performing the flow channel adjustment.

The initial viscosity of the profile control and flooding system A3, the viscosity after aging and viscosity increase rate after aging at 130°C for 60 days were measured, the results were shown in Table A4.

### Use Example 4

10g of the copolymers obtained in Examples 4-6 and Comparative Examples D1-D4 were added into 900g of simulated brine (with a mineralization degree of 300,000mg/L and a content calcium and magnesium ions of 10,000mg/L) respectively, stirred at a rotational speed of 600rpm till complete dissolution of the copolymers, 0.5g of chromium citrate and 0.8g of chromium lactate were added and stirring to complete dissolution, 0.8g of sodium thiosulfate was further added, the solution was replenished to a total weight of 1kg by using the simulated brine (with a mineralization degree of 300,000mg/L and a content calcium and magnesium ions of 10,000mg/L), and stirred uniformly to obtain the copolymer gel solution profile control and flooding systems A4-A6 and AD1-AD4, which can be used as a flow control agent for performing the flow channel adjustment.

The initial viscosity of the profile control and flooding systems A4-A6 and AD1-AD4, the viscosity after aging at 130°C for 60 days and the viscosity increase rate were measured, the results were shown in Table A4.

### Use Example 5

9g of the copolymer obtained in Example 1 was added into 900g of simulated brine, stirred at a rotational speed of 600rpm till complete dissolution of the copolymer, 4g of hydroquinone and 5g of hexamethylenetetramine were then added and stirred to complete dissolution, 0.8g of sodium thiosulfate was further added, the solution was replenished to a total weight of 1kg by using the simulated brine, and stirred uniformly to obtain a copolymer gel solution profile control and flooding system B1.

The simulated brine was selected with two mineralization degrees and contents of calcium and magnesium ions, the first simulated brine had a mineralization degree of 300,000mg/L and a content of calcium and magnesium ions of 10,000mg/L, the second simulated brine had a mineralization degree of 100,000mg/L and a content of calcium and magnesium ions of 5,000mg/L.

The storage modulus and dehydration rate of the profile control and flooding system B1 prepared with the simulated brine having a mineralization degree of 300,000mg/L and a content of calcium and magnesium ions of 10,000mg/L after aging at 140-160°C for 90 days were measured, the results were shown in Table A5; in addition, the storage modulus and dehydration rate of the profile control and flooding system B1 after aging at 150°C for 90 days were measured, the results were shown in Table A6.

The storage modulus and dehydration rate of the profile control and flooding system B1' prepared with the simulated brine having a mineralization degree of 100,000mg/L and a content of calcium and magnesium ions of 5,000mg/L after aging at 140-160°C for 90 days were measured, the results were shown in Table A5.

### Use Example 6

12g of the copolymer obtained in Example 2 was added into 900g of simulated brine (with a mineralization degree of 300,000mg/L and a content calcium and magnesium ions of 10,000mg/L), stirred at a rotational speed of 600rpm till complete dissolution of the copolymer, 5.5g of catechol and 5g of hexamethylenetetramine were then added and stirred to complete dissolution, 0.9g of erythorbic acid was added, the solution was replenished to a total weight of 1kg by using the simulated brine (with a mineralization degree of 300,000mg/L and a content calcium and magnesium ions of 10,000mg/L), and stirred uniformly to obtain a copolymer profile control and flooding system B2, which can be used as a plugging control agent for plugging water.

The storage modulus and dehydration rate of the profile control and flooding system after aging at 150°C for 90 days were measured, the results were shown in Table A6.

### Use Example 7

11g of the copolymer obtained in Example 3 was added into 900g of simulated brine (with a mineralization degree of 300,000mg/L and a content calcium and magnesium ions of 10,000mg/L), stirred at a rotational speed of 600rpm till complete dissolution of the copolymer, 5g of hydroquinone and 6g of hexamethylenetetramine were then added and stirred till complete dissolution, 0.9g of thiourea was further added, the solution was replenished to a total weight of 1kg by using the simulated brine (with a mineralization degree of 300,000mg/L and a content calcium and magnesium ions of 10,000mg/L), and stirred uniformly to obtain a sulfonic acid type copolymer profile control and flooding system B3, which can be used as a plugging control agent for plugging water.

The storage modulus and dehydration rate of the profile control and flooding system after aging at 150°C for 90 days were measured, the results were shown in Table A6.

### Use Example 8

9g of the copolymers obtained in Examples 4-6 and Comparative Examples D1-D4 were added into 900g of simulated brine (with a mineralization degree of 300,000mg/L and a content calcium and magnesium ions of 10,000mg/L) respectively, stirred at a rotational speed of 600rpm till complete dissolution of the copolymer, 4g of hydroquinone and 5g of hexamethylenetetramine were then added and stirred till complete dissolution, 0.8g of sodium thiosulfate was further added, the solution was replenished to a total weight of 1kg by using the simulated brine (with a mineralization degree of 300,000mg/L and a content calcium and magnesium ions of 10,000mg/L), and stirred uniformly to obtain the copolymer gel solution profile control and flooding systems B4-B6 and BD1-BD4, which can be used as a plugging control agent for plugging water.

The storage modulus and dehydration rate of the profile control and flooding systems B4-B6 and BD1-BD4 after aging at 150°C for 90 days were measured, the results were shown in Table A6.

**Table A3 Viscosity of the profile control and flooding systems Al and Al' after aging for 60 days**

| Temperature (° C) | Mineralization degree (mg/L) | Content of calcium and magnesium ions (mg/L) | Viscosity after aging for 60 days (mPa·s) |
|---|---|---|---|
| 70 | 300000 | 10000 | 1518 |
| | 100000 | 5000 | 1894 |
| 95 | 300000 | 10000 | 3897 |
| | 100000 | 5000 | 3912 |
| 130 | 300000 | 10000 | 3269 |
| | 100000 | 5000 | 3415 |

**Table A4 Initial viscosity, viscosity after aging, and viscosity increase rate for the profile control and flooding systems**

| No. | Initial viscosity (mPa·s) | Viscosity after aging at a high temperature of 130°C (mPa·s) | Viscosity increase rate (%) |
|---|---|---|---|
| Profile control and flooding system A1 | 680 | 3269 | 380.7 |
| Profile control and flooding system A2 | 490 | 2631 | 436.9 |
| Profile control and flooding system A3 | 585 | 2195 | 275.2 |
| Profile control and flooding system A4 | 664 | 2460 | 270.5 |
| Profile control and flooding system A5 | 548 | 1782 | 225.2 |
| Profile control and flooding system A6 | 610 | 1845 | 202.5 |
| Profile control and flooding system AD1 | 765 | 25(15d) , white precipitation appears at the bottom of tank | -96.7 |
| Profile control and flooding system AD2 | 630 | 1608 | 155.2 |
| Profile control and flooding system AD3 | 608 | 1365 | 124.5 |
| Profile control and flooding system AD4 | 585 | 1180 | 101.7 |

As can be seen from the results in Tables A3 and A4, the profile control and flooding systems A1-A6 exhibited the better viscosity increase effect and the higher viscosity increase rate than the profile control and flooding systems AD1-AD4. The profile control and flooding systems A1-A6 formed by the sulfonic acid type copolymers and metal cross-linking agents and prepared in Examples 1-6 of the present invention exhibited desirable viscosity, excellent stability, and a viscosity increase rate greater than 200%, after aging at a temperature of 70-130°C for 60 days in water having a mineralization degree less than or equal to 300,000mg/L and a content of calcium magnesium ions less than or equal to 10,000mg/L, thus the profile control and flooding systems can be used for flow channel adjustment in the carbonate rock oil reservoirs.

**Table A5 Storage modulus and dehydration rate of the profile control and flooding systems B1 and B1' after aging for 90 days**

| Temperature (°C) | Mineralization degree (mg/L) | Content of calcium and magnesium ions (mg/L) | Storage modulus (Pa) | Dehydration rate (%) |
|---|---|---|---|---|
| 140 | 300000 | 10000 | 31.8 | 0.5 |
| | 100000 | 5000 | 34.7 | 0.3 |
| 150 | 300000 | 10000 | 31.0 | 1.1 |
| | 100000 | 5000 | 32.0 | 0.6 |
| 160 | 300000 | 10000 | 28.9 | 4.5 |
| | 100000 | 5000 | 30.1 | 3.9 |

**Table A6 Storage modulus and dehydration rate of the profile control and flooding systems**

| No. | High temperature and aging time | Storage modulus (Pa) | Dehydration rate (%) |
|---|---|---|---|
| Profile control and flooding system B1 | 150°C (90 days) | 31.0 | 1.1 |
| Profile control and flooding system B2 | 150°C (90 days) | 35.4 | 3.5 |
| Profile control and flooding system B3 | 150°C (90 days) | 32.8 | 2.4 |
| Profile control and flooding system B4 | 150°C (90 days) | 20.2 | 9.3 |
| Profile control and flooding system B5 | 150°C (90 days) | 19.4 | 9.7 |
| Profile control and flooding system B6 | 150°C (90 days) | 18.6 | 11.0 |
| Profile control and flooding system BD1 | 150°C (30 days) | - | 68.0 |
| Profile control and flooding system BD2 | 150°C (90 days) | 18.0 | 15.3 |
| Profile control and flooding system BD3 | 150°C (90 days) | 16.6 | 16.8 |
| Profile control and flooding system BD4 | 150°C (90 days) | 16.1 | 17.2 |

As can be seen from the results in Tables A5 and A6, the profile control and flooding systems B1-B6 exhibited lower dehydration rates than the profile control and flooding systems BD1-BD4. The sulfonic acid copolymer with a controllable hydrolysis rate prepared in Examples 1-6 of the present invention may react with the phenolic cross-linking agent and aldehyde cross-linking agent to obtain the copolymer gel solution profile control and flooding systems B1-B6, which exhibited low dehydration rates and higher storage modulus after aging at 140-160°C for 90 days in environments with a mineralization degree less than or equal to 300,000mg/L and a content of calcium and magnesium ions less than or equal to 10,000mg/L, indicating the high strength and excellent thermal stability of the profile control and flooding systems, and can be used as a plugging agent for ultra-deep wells in the carbonate oil reservoirs.

In summary, the copolymers of the present invention can slowly release the cross-linking groups after aging at a high temperature, that is, the cross-linking groups generated from the structural unit B and structural unit C in the copolymers after aging at a high temperature have a slow release function. The copolymers achieve initial low viscosity at an initial stage of injection into the reservoir, and during migration, cross-linking groups are continuously released by means of slow hydrolysis to cross link with a cross-linking agent, thereby achieving stepwise tackifying, and finally maintaining a certain viscosity and strength, the copolymers have desirable viscosity and strength after aging at a high temperature, and maintain a long-term stability, achieve the deep profile control and flooding, thus can be used as the flow control agent and plugging control agent of the carbonate oil reservoir for the flow channel adjustment and plugging.

The above content describes in detail the preferred embodiments of the present invention, but the present invention is not limited thereto. A variety of simple modifications can be made in regard to the technical solutions of the present invention within the scope of the technical concept of the present invention, including a combination of individual technical features in any other suitable manner, such simple modifications and combinations thereof shall also be regarded as the content disclosed by the present invention, each of them falls into the protection scope of the present invention.

## Claims

1. A copolymer, wherein the copolymer comprises: a structural unit A represented by formula I, a structural unit B represented by formula II, a structural unit C represented by formula III, and a structural unit D represented by formula IV; 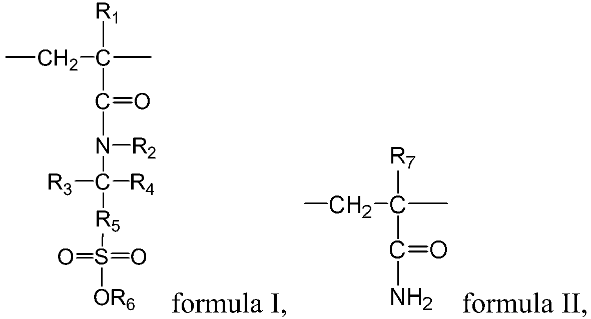 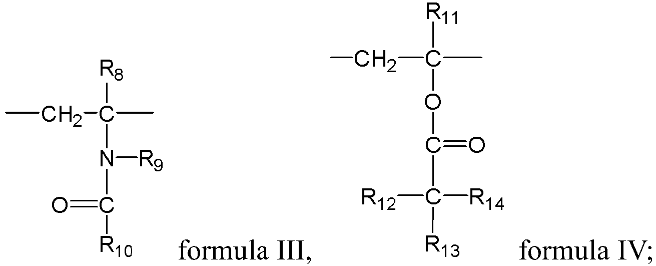
wherein R₁, R₇, R₈ and R₁₁ are each independently H or C1-C6 alkyl;
R₂, R₉ and R₁₀ are each independently H or C1-C6 alkyl;
R₃ and R₄ are each independently C1-C6 alkyl;
R₅ is C1-C6 alkylene; R₆ is H or an alkali metal element;
R₁₂, R₁₃ and R₁₄ are each independently C1-C6 alkyl, and at least one of R₁₂, R₁₃ and R₁₄ is methyl.

2. The copolymer according to claim 1, wherein R₁, R₇, R₈ and R₁₁ are each independently H or methyl;
and/or, R₂ is H;
and/or, R₃ and R₄ are each independently methyl;
and/or, R₅ is methylene; R₆ is H or Na;
and/or, R₉ is H;
and/or, R₁₀ is H or methyl;
and/or, R₁₂, R₁₃ and R₁₄ are each independently methyl; or one substituent of R₁₂, R₁₃ and R₁₄ is methyl, the total carbon atom number of the remaining two substituents is from 6 to 8; preferably, R₁₂ is methyl, R₁₃ is n-pentyl, and R₁₄ is methyl; or R₁₂ is methyl, R₁₃ is n-hexyl, and R₁₄ is methyl.

3. The copolymer according to claim 1 or 2, wherein R₁, R₇, R₈ and R₁₁ are each independently H; R₂ is H; R₃ and R₄ are each independently methyl; R₅ is methylene; R₆ is H or Na; R₉ is H; R₁₀ is H or methyl; R₁₂, R₁₃ and R₁₄ are each independently methyl.

4. The copolymer according to any one of claims 1-3, wherein the structural unit D is contained in an amount of 0.1-2wt%, based on the total weight of the copolymer;
preferably, the structural unit A is contained in an amount of not less than 60wt%, based on the total weight of the copolymer.

5. The copolymer according to any one of claims 1-4, wherein the structural unit A is contained in an amount of 65-90wt%, the structural unit B is contained in an amount of 5-30wt%, the structural unit C is contained in an amount of 1-8wt%, the structural unit D is contained in an amount of 0.1-2wt%, based on the total weight of the copolymer;
preferably, the structural unit A is contained in an amount of 70-84wt%, the structural unit B is contained in an amount of 12-25wt%, the structural unit C is contained in an amount of 3-6wt%, the structural unit D is contained in an amount of 0.2-1wt%, based on the total weight of the copolymer.

6. The copolymer according to any one of claims 1-5, wherein the copolymer has a viscosity average molecular weight within the range of 5,000,000-18,000,000, preferably within the range of 8,000,000-18,000,000, more preferably within the range of 12,000,000-17,000,000.

7. A copolymer comprising an olefin backbone, and functional groups bonded to the olefin backbone, wherein the functional groups comprise a sulfonic acid group, a tertiary carbonate group, an acylamino group, and an aminoacyl group; wherein the weight content of said tertiary carbonate group is within the range of 0.06-1.5wt%, and the weight content of said sulfonic acid group is not less than 21wt%, based on the total weight of said copolymer; the copolymer has a viscosity average molecular weight within the range of 5,000,000-18,000,000.

8. A method for preparing a copolymer, wherein the method comprises:
subjecting an alkenyl monomer to a polymerization reaction under a solution polymerization reaction condition in the presence of an initiator;
wherein the alkenyl monomer comprises a structural unit A' represented by formula 1, a structural unit B' represented by formula 2, a structural unit C' represented by formula 3, and a structural unit D' represented by formula 4; 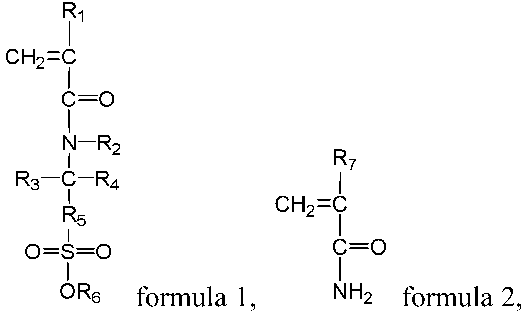 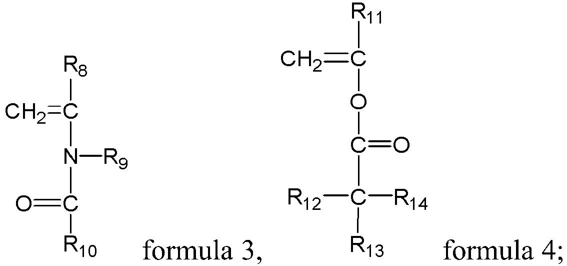
wherein R₁, R₇, R₈ and R₁₁ are each independently H or C1-C6 alkyl;
R₂, R₉ and R₁₀ are each independently H or C1-C6 alkyl;
R₃ and R₄ are each independently C1-C6 alkyl;
R₅ is C1-C6 alkylene; R₆ is H or an alkali metal element;
R₁₂, R₁₃ and R₁₄ are each independently C1-C6 alkyl, and at least one of R₁₂, R₁₃ and R₁₄ is methyl.

9. The method according to claim 8, wherein R₁, R₇, R₈ and R₁₁ are each independently H or methyl;
and/or, R₂ is H;
and/or, R₃ and R₄ are each independently methyl;
and/or, R₅ is methylene; R₆ is H or Na;
and/or, R₉ is H;
and/or, R₁₀ is H or methyl;
and/or, R₁₂, R₁₃ and R₁₄ are each independently methyl; or one substituent of R₁₂, R₁₃ and R₁₄ is methyl, the total carbon atom number of the remaining two substituents is from 6 to 8; preferably, R₁₂ is methyl, R₁₃ is n-pentyl, and R₁₄ is methyl; or R₁₂ is methyl, R₁₃ is n-hexyl, and R₁₄ is methyl.

10. The method according to claim 8 or 9, wherein R₁, R₇, R₈ and R₁₁ are each independently H; R₂ is H; R₃ and R₄ are each independently methyl; R₅ is methylene; R₆ is H or Na; R₉ is H; R₁₀ is H or methyl; R₁₂, R₁₃ and
R₁₄ are each independently methyl.

11. The method according to any one of claims 8-10, wherein the structural unit D' is contained in an amount of 0.1-2wt%, based on the total weight of the alkenyl monomer;
preferably, the structural unit A' is contained in an amount of not less than 60wt%, based on the total weight of the alkenyl monomer.

12. The method according to any one of claims 8-11, wherein the structural unit A' is contained in an amount of 65-90wt%, the structural unit B' is contained in an amount of 5-30wt%, the structural unit C' is contained in an amount of 1-8wt%, the structural unit D' is contained in an amount of is 0.1-2wt%, based on the total weight of said alkenyl monomer;
preferably, the structural unit A' is contained in an amount of 70-84wt%, the structural unit B' is contained in an amount of 12-25wt%, the structural unit C' is contained in an amount of 3-6wt%, the structural unit D' is contained in an amount of 0.2-1wt%, based on the total weight of said alkenyl monomer.

13. The method according to any one of claims 8-12, wherein the initiator is used in an amount of 0.0003-0.05wt% relative to the weight of said alkenyl monomer;
and/or, the initiator is selected from azo-based initiators and/or redox-based initiators.

14. The method according to any one of claims 8-13, wherein the solution polymerization reaction conditions comprise: a starting temperature from -10°C to 30°C, a time of 2-12h, and a pH of 4-8.

15. A copolymer produced with the method according to any one of claims 8-14.

16. A profile control and flooding system, wherein the profile control and flooding system comprises a cross-linking agent, and the copolymer according to any one of claims 1-6, 7 and 15.

17. The profile control and flooding system according to claim 16, wherein the copolymer is contained in an amount of 0.3-1.5wt% in the profile control and flooding system.
